# EUROPÄISCHE PATENTANMELDUNG

(11) **EP 4 674 883 A1**
(43) Veröffentlichungstag der Anmeldung: **07.01.2026**
(21) Anmeldenummer: 24185742.4
(22) Anmeldetag: 01.07.2024
(51) Int. Cl.: C08G 18/40

(54) **HERSTELLUNG VON HALOGENFREI FLAMMGESCHÜTZTEN POLYURETHAN-HARTSCHÄUMEN UND POLYISOCYANURAT-HARTSCHÄUMEN**

(71) Anmelder: BASF SE, 67056 Ludwigshafen am Rhein (DE)
(72) Erfinder: Kampf, Gunnar, 49448 Lemfoerde (DE); Beckschewe, Annika, 49448 Lemfoerde (DE); Sdrujkowski, Waldemar, 49448 Lemfoerde (DE)
(74) Vertreter: Altmann Stößel Dick Patentanwälte PartG mbB

(57) **Zusammenfassung**

Die vorliegende Erfindung betrifft ein Verfahren zur Herstellung von Polyurethan-Hartschaumstoffen oder Polyisocyanurat-Hartschaumstoffen umfassend die Umsetzung von mindestens einem Polyisocyanat (A) und einer spezifischen Polyolkomponente, wobei die eingesetzten Flammschutzmittel so ausgewählt werden, dass der Phosphorgehalt bezogen auf die Summe der eingesetzten Komponenten kleiner oder gleich 1 Gew.-% ist. Weiterhin betrifft die vorliegende Erfindung die Polyolkomponente wie beschrieben sowie Polyurethan-Hartschaumstoffe oder Polyisocyanurat-Hartschaumstoffe, erhältlich oder erhalten nach einem erfindungsgemäßen Verfahren und die Verwendung eines erfindungsgemäßen Polyurethan-Hartschaumstoffs oder Polyisocyanurat-Hartschaumstoffs zur Herstellung von Sandwich-Elementen.

## Beschreibung

Die vorliegende Erfindung betrifft halogenfrei flammgeschützte Polyurethan-Hartschaumstoffe und Polyisocyanurat-Hartschaumstoffe, ein Verfahren zu ihrer Herstellung sowie eine zu ihrer Herstellung geeignete Polyolkomponente enthaltend Polyetheresterpolyole. Ferner betrifft die vorliegende Erfindung die Verwendung der so erhältlichen Hartschaumstoffe zur Herstellung von Sandwichelementen mit starren oder flexiblen Deckschichten.

Die vorliegende Erfindung betrifft ein Verfahren zur Herstellung von Polyurethan-Hartschaumstoffen oder Polyisocyanurat-Hartschaumstoffen umfassend die Umsetzung von mindestens einem Polyisocyanat (A) und einer spezifischen Polyolkomponente, wobei die eingesetzten Flammschutzmittel so ausgewählt werden, dass der Phosphorgehalt bezogen auf die Summe der eingesetzten Komponenten kleiner oder gleich 1 Gew.-% ist. Weiterhin betrifft die vorliegende Erfindung die Polyolkomponente wie beschrieben sowie Polyurethan-Hartschaumstoffe oder Polyisocyanurat-Hartschaumstoffe, erhältlich oder erhalten nach einem erfindungsgemäßen Verfahren und die Verwendung eines erfindungsgemäßen Polyurethan-Hartschaumstoffs oder Polyisocyanurat-Hartschaumstoffs zur Herstellung von Sandwich-Elementen.

Die Herstellung von Polyurethan-Hartschaumstoffen durch Umsetzung von organischen oder modifizierten organischen Di- oder Polyisocyanaten mit höhermolekularen Verbindung mit mindestens zwei reaktiven Wasserstoffatomen, insbesondere mit Polyetherpolyolen aus der Alkylenoxidpolymerisation oder Polyesterpolyolen aus der Polykondensation von Alkoholen mit Dicarbonsäuren in Gegenwart von Polyurethankatalysatoren, Kettenverlängerungs- und/oder Vernetzungsmitteln, Treibmitteln und weiteren Hilfs- und Zusatzstoffen ist bekannt und wird in zahlreichen Patent- und Literaturveröffentlichungen beschrieben.

Im Rahmen der vorliegenden Offenbarung werden die Begriffe "Polyesterpolyol", "Polyesterol", "Polyesteralkohol" und die Abkürzung "PESOL" gleichbedeutend verwendet.

Bei Einsatz von Polyesterpolyolen ist es üblich, Polykondensate aus aromatischen und/oder aliphatischen Dicarbonsäuren und Alkandiolen und/oder -triolen bzw. Etherdiolen einzusetzen. Es ist aber auch möglich, Polyesterabfälle und hier insbesondere Polyethylenterephthalat (PET)- bzw. Polybutylenterephthalat (PBT)-Abfälle zu verarbeiten. Hierfür sind eine ganze Reihe von Verfahren bekannt und beschrieben. Grundlage einiger Verfahren ist die Umwandlung des Polyesters in einen Diester der Terephthalsäure, z.B. in Dimethylterephthalat.

In DE-A 100 37 14 und US-A 5,051,528 werden derartige Umesterungen unter Einsatz von Methanol und Umesterungskatalysatoren beschrieben.

Ferner ist bekannt, dass Terephthalsäure-basierte Ester bezüglich des Brandverhaltens Phthalsäure-basierten Estern überlegen sind, wie zum Beispiel in WO 2010/043624 beschrieben.

Beim Einsatz der Polyesterpolyole, die auf aromatischen Carbonsäuren oder deren Derivaten basieren (wie Terephthalsäure oder Phthalsäureanhydrid), zur Herstellung von Polyurethan (PU)-Hartschaumstoffen macht sich oft die hohe Viskosität der Polyesterpolyole negativ bemerkbar, da somit die Viskosität der Abmischungen mit den Polyestern ansteigt und dadurch die Vermischung mit dem Isocyanat deutlich erschwert wird.

Aus der EP-A 1 058 701 sind aromatische Polyesterpolyole mit niedriger Viskosität bekannt, die durch Umesterung eines Gemisches aus Phtalsäurederivaten, Diolen, Polyolen und hydrophoben fettbasierten Materialien erhalten werden.

Zudem kann es in bestimmten Systemen zur Herstellung von PU-Hartschaumstoffen, zu Problemen mit einer unzureichenden Maßhaltigkeit kommen, d.h. das Schaumstoff-Produkt verformt sich nach der Entformung oder nach der Druckstrecke bei Verarbeitung nach dem Doppelbandverfahren deutlich.

Ein generelles Problem bei der Herstellung von Hartschaumstoffen ist die Ausbildung von Oberflächendefekten, vorzugsweise an der Grenzfläche zu metallischen Deckschichten. Diese Schaumoberflächendefekte bedingen die Ausbildung einer unebenen Metalloberfläche bei Sandwichelementen und führen somit oft zu einer optischen Beanstandung des Produkts. Eine Verbesserung der Schaumoberfläche vermindert die Häufigkeit des Auftretens solcher Oberflächendefekte und führt somit zu einer optischen Verbesserung der Oberfläche von Sandwichelementen.

Polyurethan-Hartschaumstoffe zeigen häufig eine hohe Sprödigkeit, was sich beim Zuschnitt der Schäume entweder durch eine starke Staubentwicklung und hohe Empfindlichkeit des Schaums zeigt, oder im Falle des Sägens des Schaumstoffs, vor allem beim Sägen von Verbundelementen mit metallischen Deckschichten und einem Kern aus einem Polyisocyanuratschaum zur Rissbildung im Schaum führen kann.

Ferner ist es allgemein wünschenswert, Systeme mit einer möglichst hohen Eigenreaktivität bereitzustellen, um den Einsatz von Katalysatoren zu minimieren.

Darüber hinaus ist es vorteilhaft, die Wärmedämmeigenschaften der Polyurethan-Hartschaumstoffe und Polyisocyanurat-Hartschaumstoffe möglichst zu optimieren, d.h. einen feinzelligen Schaum mit hohen Anteilen an physikalischem Treibmittel zu erzeugen, ohne dabei die Oberflächenbeschaffenheiten oder das Brandverhalten zu stark negativ zu beeinflussen.

Auch ist das Problem des Verhaltens von PU-Hartschaumstoffen im Brandfall bisher nicht für alle Systeme befriedigend gelöst. So werden den Polyurethan- und Polyisocyanurat-Hartschaum Formulierungen üblicherweise halogenierte Flammschutzmittel zugesetzt, um die Flammwidrigkeit positiv zu beeinflussen und die Viskosität der Polyolabmischung zu reduzieren und die Mischbarkeit mit dem Isocyanat zu erleichtern. Die halogenierten Flammschutzmittel sind jedoch aus toxikologischer und ökologischer Sicht bedenklich. Auch die halogenfreien Alternativen können unerwünschte Effekte in der Anwendung wie auch in der Umwelt auslösen und reagieren meist nicht in die PU-Matrix ein, weswegen eine weitgehende Minimierung der Einsatzmengen anzustreben ist.

Ferner kann sich beim Einsatz von Trimethylolpropan (TMP) als höherfunktionelle alkoholische Polyester-Komponente im Brandfall eine toxische Verbindung bilden.

Es besteht daher die Aufgabe, eine Polyolkomponente zur Herstellung von halogenfrei flammgeschützten PU-Hartschaumstoffe bereitzustellen. Weiterhin ist es Aufgabe der Erfindung die Einsatzmengen des verwendeten Flammschutzmittel nach Möglichkeit zu minimieren.

Aufgabe der Erfindung ist es weiterhin, eine Polyolkomponente bereitzustellen, welche eine hohe Eigenreaktivität aufweist und deren Mischbarkeit mit dem Isocyanat verbessert, zumindest jedoch nicht verschlechtert, ist.

Darüber hinaus ist es die Aufgabe, halogenfrei flammgeschützten PU-Hartschaumstoffe mit geringer Sprödigkeit und guten Wärmedämmleistungen bereitzustellen

Weitere Aufgaben waren zudem, die Maßhaltigkeit der PU-Endprodukte zu verbessern, oder jedenfalls nicht zu verschlechtern, und auch die Bildung von toxischen Verbindungen im Brandfall zu verringern, zumindest jedoch nicht zu verschlechtern. Weiterhin sollte die Verarbeitbarkeit in Bezug auf die Ausbildung von Oberflächendefekten verbessert, jedoch zumindest nicht verschlechtert, werden.

Eine potentielle Ursache für das Auftreten von Oberflächendefekten aber auch für eine schlechtere Maßhaltigkeit ist dabei das Nachsteigen des Schaums nach der Abbindezeit.

Im Hinblick auf z.B. die Maßhaltigkeit ist ferner die Schaumaushärtung ein wichtiger Faktor.

Es war somit auch Aufgabe der vorliegenden Erfindung, das Nachsteigen sowie die Aushärtung des Schaums zu optimieren, oder jedenfalls nicht zu verschlechtern.

Darüber hinaus solle auch die Löslichkeit von Treibmitteln, zum Beispiel von Pentan in der Polyolkomponente, möglichst gut sein.

Gelöst wird die Aufgabe durch ein Verfahren zur Herstellung von Polyurethan-Hartschaumstoffen oder Polyisocyanurat-Hartschaumstoffen umfassend die Umsetzung von
A) mindestens einem Polyisocyanat,
B) mindestens einem Polyetheresterpolyol, erhältlich durch Veresterung von
   b1) 10 bis 80 Gew.-% einer Dicarbonsäurezusammensetzung, enthaltend
      b11) 50 bis 100 Gew.-%, bezogen auf die Dicarbonsäurezusammensetzung, einer oder mehrerer aromatischer Dicarbonsäuren oder Derivate derselben, wobei bei Verwendung von aromatischen Dicarbonsäurederivaten nur der Massenanteil der Dicarbonsäure als Komponente b11) zu berücksichtigen ist,
      b12) 0 bis 50 Gew.-%, bezogen auf die Dicarbonsäurezusammensetzung b1), einer oder mehrerer aliphatischer Dicarbonsäuren oder Derivate derselben,
   b2) 0 bis 30 Gew.-% einer oder mehrerer Fettsäuren und/oder Fettsäurederivate,
   b3) 2 bis 65 Gew.-% eines oder mehrerer aliphatischer oder cycloaliphatischer Diole mit 2 bis 18 C-Atomen oder Alkoxylate derselben, wobei bei Einsatz von Dicarbonsäurederivaten der Glykolanteil (Gew.-%) des Derivats als Komponenten b3) zu berücksichtigen ist,
   b4) 10 bis 70 Gew.-% einer Mischung enthaltend
      b41) ein Polyetherpolyol mit einer Funktionalität größer oder gleich 2, hergestellt durch Alkoxylierung eines Polyols mit einer Funktionalität größer 2 sowie optional
      b42) nicht-alkoxyliertem Polyol mit einer Funktionalität größer 2, dadurch gekennzeichnet, dass das Verhältnis von alkoxyliertem Polyetherpolyol
      b41) zu nicht-alkoxyliertem Polyol b42) größer 0,5 ist,
   jeweils bezogen auf die Gesamtmenge der Komponenten b1) bis b4), wobei sich die Komponenten b1) bis b4) zu 100 Gew.-% addieren,
C) gegebenenfalls weiteren Polyesterpolyolen, die sich von denen der Komponente B) unterscheiden,
D) gegebenenfalls einem Polyetherpolyol oder einer Mischung verschiedener Polyetherpolyole, und
E) gegebenenfalls einem halogenfreien, phosphorhaltigen Flammschutzmittel oder einer Mischung aus verschiedenen halogenfreien, phosphorhaltigen Flammschutzmitteln,
F) gegebenenfalls weiteren halogenfreien Flammschutzmitteln,
G) einem oder mehreren Treibmitteln,
H) Katalysatoren, und
I) gegebenenfalls weiteren Hilfsmitteln oder Zusatzstoffen,
wobei das oder die halogenfreien Flammschutzmittel E) Phosphor enthält, keine Halogenatome enthält und in solchen Anteilen verwendet werden, dass der Phosphorgehalt bezogen auf die Summe der Komponenten A) bis I) kleiner oder gleich 1 Gew.-% ist.

Gegenstand der vorliegenden Erfindung ist außerdem eine Polyolkomponente enthaltend die vorgenannten Komponenten B) bis I), wobei die halogenfreien Flammschutzmittel E) Phosphor enthalten und in solchen Anteilen verwendet werden, dass der Phosphorgehalt bezogen auf die Summe der Komponenten B) bis I) kleiner oder gleich 3 Gew.-% ist.

Gemäß einer Ausführungsform betrifft die vorliegenden Erfindung eine Polyolkomponente enthaltend die vorgenannten Komponenten B) bis I),
B) mindestens einem Polyetheresterpolyol (B), erhältlich durch Veresterung von
   b1) 10 bis 80 Gew.-% einer Dicarbonsäurezusammensetzung (b1), enthaltend
      b11) , einer oder mehrerer aromatischer Dicarbonsäuren oder Derivate derselben in einer Menge von 50 bis 100 Gew.-%, bezogen auf die Dicarbonsäurezusammensetzung (b1), wobei bei Verwendung von aromatischen Dicarbonsäurederivaten nur der Massenanteil der Dicarbonsäure als Komponente b11) zu berücksichtigen ist,
      b12) einer oder mehrerer aliphatischer Dicarbonsäuren (b12) oder Derivate derselben in einer Menge von 0 bis 50 Gew.-%, bezogen auf die Dicarbonsäurezusammensetzung b1),
   b2) einer oder mehrerer Fettsäuren und/oder Fettsäurederivate in einer Menge von 0 bis 30 Gew.-%,
   b3) eines oder mehrerer aliphatischer oder cycloaliphatischer Diole mit 2 bis 18 C-Atomen oder Alkoxylate in einer Menge von 2 bis 65 Gew.-% derselben, wobei bei Einsatz von Dicarbonsäurederivaten der Glykolanteil (Gew.-%) des Derivats als Komponenten b3) zu berücksichtigen ist,
   b4) 10 bis 70 Gew.-% einer Mischung enthaltend
      b41) ein Polyetherpolyol mit einer Funktionalität größer oder gleich 2, hergestellt durch Alkoxylierung eines Polyols mit einer Funktionalität größer 2 sowie optional
      b42) nicht-alkoxyliertem Polyol mit einer Funktionalität größer 2, dadurch gekennzeichnet, dass das Verhältnis von alkoxyliertem Polyetherpolyol b41) zu nicht-alkoxyliertem Polyol b42) größer 0,5 ist,
   jeweils bezogen auf die Gesamtmenge der Komponenten b1) bis b4), wobei sich die Komponenten b1) bis b4) zu 100 Gew.-% addieren,
C) gegebenenfalls weiteren Polyesterpolyolen, die sich von denen der Komponente B) unterscheiden,
D) gegebenenfalls einem Polyetherpolyol oder einer Mischung verschiedener Polyetherpolyole, und
E) gegebenenfalls einem halogenfreien, phosphorhaltigen Flammschutzmittel oder einer Mischung aus verschiedenen halogenfreien, phosphorhaltigen Flammschutzmitteln,
F) gegebenenfalls weiteren halogenfreien Flammschutzmitteln,
G) einem oder mehreren Treibmitteln,
H) Katalysatoren, und
I) gegebenenfalls weiteren Hilfsmitteln oder Zusatzstoffen,
wobei die halogenfreien Flammschutzmittel E) Phosphor enthalten und in solchen Anteilen verwendet werden, dass der Phosphorgehalt bezogen auf die Summe der Komponenten B) bis I) kleiner oder gleich 3 Gew.-% ist.

Weitere Gegenstände der vorliegenden Erfindung sind Polyurethan-Hartschaumstoffe und Polyisocyanurat-Hartschaumstoffe, erhältlich nach dem erfindungsgemäßen Verfahren sowie deren Verwendung zur Herstellung von Sandwich-Elementen mit starren oder flexiblen Deckschichten.

Die Erfindung wird nachfolgend näher erläutert. Kombinationen von bevorzugten Ausführungsformen verlassen den Rahmen der vorliegenden Erfindung nicht. Dies gilt insbesondere in Bezug auf die als bevorzugt gekennzeichneten Ausführungsformen der einzelnen Komponenten A) bis I) der vorliegenden Erfindung. Die nachfolgend im Rahmen von Komponente B) bis I) aufgeführten Ausführungsformen beziehen sich sowohl auf das erfindungsgemäße Verfahren und die so erhältlichen Hartschaumstoffe als auch auf die erfindungsgemäßen Polyolkomponenten.

### Komponente A

Unter Polyisocyanat wird im Rahmen der vorliegenden Erfindung eine organische Verbindung verstanden, welche mindestens zwei reaktive Isocyanatgruppen pro Molekül enthält, d. h. die Funktionalität beträgt mindestens 2. Sofern die eingesetzten Polyisocyanate oder ein Gemisch mehrerer Polyisocyanate keine einheitliche Funktionalität aufweisen, so beträgt der zahlengewichtete Mittelwert der Funktionalität der eingesetzten Komponente A) mindestens 2.

Als Polyisocyanate A) kommen die an sich bekannten aliphatischen, cycloaliphatischen, araliphatischen und vorzugsweise die aromatischen mehrwertigen Isocyanate in Betracht. Derartige mehrfunktionelle Isocyanate sind an sich bekannt oder können nach an sich bekannten Methoden hergestellt werden. Die mehrfunktionellen Isocyanate können insbesondere auch als Mischungen eingesetzt werden, so dass die Komponente A) in diesem Fall verschiedene mehrfunktionelle Isocyanate enthält. Als Polyisocyanat in Betracht kommende mehrfunktionelle Isocyanate weisen zwei (im folgenden Diisocyanate genannt) oder mehr als zwei Isocyanatgruppen pro Molekül auf.

Im Einzelnen seien insbesondere genannt: Alkylendiisocyanate mit 4 bis 12 Kohlenstoffatomen im Alkylenrest, wie 1,12-Dodecandiioscyanat, 2-Ethyltetramethylendiisocyanat-1,4,2-methyl-pentamethylendiisocyanat-1,5, Tetramethylendiisocyanat-1,4, und vorzugsweise Hexamethylendiisocyanat-1,6; cycloaliphatische Diisocyanate wie Cyclohexan-1,3- und 1,4-diisocyanat sowie beliebige Gemische dieser Isomeren, 1-Isocyanato-3,3,5-trimethyl-5-isocyanatomethyl-cyclohexan (IPDI), 2,4- und 2,6-Hexahydrotoluylendiisocyanat sowie die entsprechenden Isomerengemische, 4,4'-, 2,2'- und 2,4'-Dicyclo¬hexylmethandiisocyanat sowie die entsprechenden Isomerengemische, und vorzugsweise aromatische Polyisocyanate, wie 2,4- und 2,6-Toluylendiisocyanat und die entsprechenden Isomerengemische, 4,4'-, 2,4'- und 2,2'-Diphenylmethandiiso¬cyanat und die entsprechenden Isomerengemische, Mischungen aus 4,4'- und 2,2'-Diphenylmethandiisocyanaten, Polyphenylpolymethylenpolyisocyanate, Mischungen aus 4,4'-, 2,4'- und 2,2'-Diphenylmethandiisocyanaten und Polyphenylpolymethylenpolyiso¬cyanaten (Roh-MDI) und Mischungen aus Roh-MDI und Toluylendiisocyanaten.

Insbesondere geeignet sind 2,2`-, 2,4'- und/oder 4,4'-Diphenylmethandiisocyanat (MDI), 1,5-Naphthylendiisocyanat (NDI), 2,4- und/oder 2,6-Toluylendiisocyanat (TDI), 3,3'-Dimethyldiphenyldiisocyanat, 1,2-Diphenylethandiisocyanat und/oder p-Phenylen-diisocyanat (PPDI), Tri-, Tetra-, Penta-, Hexa-, Hepta- und/oder Octamethylendiisocyanat, 2-Methylpentamethylen-1,5-diisocyanat, 2-Ethylbutylen-1,4-diisocyanat, Pentamethylen-1,5-diisocyanat, Butylen-1,4-diisocyanat, 1-Isocyanato-3,3,5-trimethyl-5-iso-cyanatomethyl-cyclohexan (Isophorondiisocyanat, IPDI), 1,4- und/oder 1,3-Bis(isocyanatomethyl)cyclohexan (HXDI), 1,4-Cyclohexandi¬iso¬cyanat, 1-Methyl-2,4- und/oder -2,6-cyclohexandiisocyanat und 4,4'-, 2,4'-und/oder 2,2'-Dicyclohexylmethandiisocyanat.

Häufig werden auch modifizierte Polyisocyanate, d.h. Produkte, die durch chemische Umsetzung organischer Polyisocyanate erhalten werden und die mindestens zwei reaktive Isocyanatgruppen pro Molekül aufweisen, verwendet. Insbesondere genannt seien Ester-, Harnstoff-, Biuret-, Allophanat-, Carbodiimid-, Isocyanurat-, Uretdion-, Carbamat- und/oder Urethangruppen enthaltende Polyisocyanate.

Besonders bevorzugt sind als Polyisocyanate der Komponente A) folgende Ausführungsformen:
i) Mehrfunktionelle Isocyanate auf Basis von Toluylendiisocyanat (TDI), insbesondere 2,4-TDI oder 2,6-TDI oder Mischungen aus 2,4- und 2,6-TDI;
ii) Mehrfunktionelle Isocyanate auf Basis von Diphenylmethandiisocyanat (MDI), insbeson2dere 2,2'-MDI oder 2,4'-MDI oder 4,4'-MDI oder oligomeres MDI, das auch als Polyphenylpolymethylenisocyanat bezeichnet wird, oder Mischungen aus zwei oder drei der vorgenannten Diphenylmethandiisocyanate, oder Roh-MDI, welches bei der Herstellung von MDI anfällt, oder Mischungen aus mindestens einem Oligomer des MDI und mindestens einem der vorgenannten niedermolekularen MDI-Derivate;
iii) Gemische aus mindestens einem aromatischen Isocyanat gemäß Ausführungsform i) und mindestens einem aromatischen Isocyanat gemäß Ausführungsform ii).

Gemäß einer weiteren Ausführungsform betrifft die vorliegende Erfindung demgemäß auch ein Verfahren wie oben beschrieben, wobei Komponente (A) ausgewählt ist aus der Gruppe bestehend aus
i) Mehrfunktionelle Isocyanate auf Basis von Toluylendiisocyanat (TDI), insbesondere 2,4-TDI oder 2,6-TDI oder Mischungen aus 2,4- und 2,6-TDI;
ii) Mehrfunktionelle Isocyanate auf Basis von Diphenylmethandiisocyanat (MDI), insbeson-dere 2,2'-MDI oder 2,4'-MDI oder 4,4'-MDI oder oligomeres MDI, das auch als Polyphe-nylpolymethylenisocyanat bezeichnet wird, oder Mischungen aus zwei oder drei der vor-genannten Diphenylmethandiisocyanate, oder Roh-MDI, welches bei der Herstellung von MDI anfällt, oder Mischungen aus mindestens einem Oligomer des MDI und mindestens einem der vorgenannten niedermolekularen MDI-Derivate; und
iii) Gemische aus mindestens einem aromatischen Isocyanat gemäß Ausführungsform i) und mindestens einem aromatischen Isocyanat gemäß Ausführungsform ii).

Als Polyisocyanat ganz besonders bevorzugt ist polymeres Diphenylmethandiisocyanat. Bei polymerem Diphenylmethandiisocyanat (im folgenden polymeres MDI genannt) handelt es sich um ein Gemisch aus zweikernigem MDI und oligomeren Kondensationsprodukten und somit Derivaten von Diphenylmethandiisocyanat (MDI). Die Polyisocyanate können bevorzugt auch aus Mischungen von monomeren aromatischen Diisocyanaten und polymerem MDI aufgebaut sein.

Polymeres MDI enthält neben zweikernigem MDI ein oder mehrere mehrkernige Kondensationsprodukte des MDI mit einer Funktionalität von mehr als 2, insbesondere 3 oder 4 oder 5. Polymeres MDI ist bekannt und wird häufig als
Polyphenylpolymethylenisocyanat oder auch als oligomeres MDI bezeichnet. Polymeres MDI ist üblicherweise aus einer Mischung aus MDI-basierten Isocyanaten mit unterschiedlicher Funktionalität aufgebaut. Üblicherweise wird polymeres MDI im Gemisch mit monomerem MDI eingesetzt.

Die (mittlere) Funktionalität eines Polyisocyanates, welches polymeres MDI enthält, kann im Bereich von ungefähr 2,2 bis ungefähr 5 variieren, insbesondere von 2,3 bis 4, insbesondere von 2,4 bis 3,5. Eine solche Mischung von MDI-basierten mehrfunktionellen Isocyanaten mit unterschiedlichen Funktionalitäten ist insbesondere das Roh-MDI, das bei der Herstellung von MDI als Zwischenprodukt erhalten wird.

Mehrfunktionelle Isocyanate oder Mischungen mehrerer mehrfunktioneller Isocyanate auf Basis von MDI sind bekannt und werden beispielsweise von BASF Polyurethanes GmbH unter dem Namen Lupranat^{®} vertrieben.

Vorzugsweise beträgt die Funktionalität der Komponente A) mindestens zwei, insbesondere mindestens 2,2 und besonders bevorzugt mindestens 2,4. Die Funktionalität der Komponente A) beträgt bevorzugt von 2,2 bis 4 und besonders bevorzugt von 2,4 bis 3.

Vorzugsweise beträgt der Gehalt an Isocyanatgruppen der Komponente A) von 5 bis 10 mmol/g, insbesondere von 6 bis 9 mmol/g, besonders bevorzugt von 7 bis 8,5 mmol/g. Dem Fachmann ist bekannt, dass der Gehalt an Isocyanatgruppen in mmol/g und das sogenannte Äquivalenzgewicht in g/Äquivalent in einem reziproken Verhältnis stehen. Der Gehalt an Isocyanatgruppen in mmol/g ergibt sich aus dem Gehalt in Gew.-% nach ASTM D-5155-96 A.

In einer besonders bevorzugten Ausführungsform besteht die Komponente A) aus mindestens einem mehrfunktionellen Isocyanat ausgewählt aus Diphenylmethan-4,4'-diisocyanat, Diphenylmethan-2,4'-diisocyanat, Diphenylmethan-2,2'-diisocyanat und oligomerem Diphenylmethandiisocyanat. Im Rahmen dieser bevorzugten Ausführungsform enthält die Komponente (a1) besonders bevorzugt oligomeres Diphenylmethan¬diisocyanat und weist eine Funktionalität von mindestens 2,4 auf.

Die Viskosität der eingesetzten Komponente A) kann in einem weiten Bereich variieren. Vorzugsweise weist die Komponente A) eine Viskosität von 100 bis 3000 mPa*s, besonders bevorzugt von 200 bis 2500 mPa*s, auf.

In einer bevorzugten Ausführungsform liegt das Massenverhältnis der Komponente A) zu der Summe der Massen der Komponenten B) bis I) größer 1,5, bevorzugt größer 1,6, besonders bevorzugt größer 1,9, spezifischer größer 2,3, noch spezifischer größer 2,6, speziell größer 2,9 und im Speziellen größer 3,2.

In einer bevorzugten Ausführungsform liegt das Massenverhältnis der Komponente A) zu der Masse der Komponente B) größer 2, bevorzugt größer 2,2, besonders bevorzugt größer 2,5, spezifischer größer 2,7, noch spezifischer größer 3,1, speziell größer 3,6 und im Speziellen größer 4.

In einer bevorzugten Ausführungsform liegt die Einsatzmenge der Komponente A) so hoch, dass das molare Verhältnis von Isocyanat-Gruppen der Komponente A) zu mit Isocyanaten reagierenden Gruppen der Komponenten B) bis I) größer 2 ist, bevorzugt größer 2,3, besonders bevorzugt größer 2,5, spezifischer größer 2,8, noch spezifischer größer 3, speziell größer 3,2 und im Speziellen größer 3,5.

### Komponente B

Im Rahmen der vorliegenden Offenbarung sind die Begriffe "Polyesterpolyol" und "Polyesterol" gleichbedeutend, ebenso die Begriffe "Polyetherpolyol" und "Polyetherol".

Vorzugsweise enthält die Komponente b11) mindestens eine Verbindung, die aus der Gruppe bestehend aus Terephthalsäure, Dimethylterephthalat (DMT), Polyethylenterephthalat (PET), Polybuthylenterephthalat (PBT), Phthalsäure, Phthalsäureanhydrid (PSA) und Isophthalsäure ausgewählt wird. Besonders bevorzugt enthält die Komponente b11) mindestens eine Verbindung aus der Gruppe bestehend aus Terephthalsäure, Dimethylterephthalat (DMT), Polyethylenterephthalat (PET), Polybutylenterephthalat (PBT) und Phthalsäureanhydrid (PSA). Ganz besonders bevorzugt besteht die Komponente b11) aus einer der Verbindungen Phthalsäureanhydrid, Terephthalsäure, Polyethylenterephthalat (PET), Polybutylenterephthalat (PBT) oder Gemischen daraus. Spezifisch besteht die Komponente b11) aus einer der Verbindungen Terephthalsäure, Polybutylenterephthalat (PBT) oder Polyethylenterephthalat (PET) oder Gemischen daraus und im Speziellen besteht die Komponente b11) Terephthalsäure oder Polyethylenterephthalat (PET) oder Gemischen daraus.

Die Verwendung von Polyethylenterephthalat (PET), Polybutylenterephthalat (PBT) in der Komponente b11) alleine oder in Abmischung mit Terephthalsäure verringert die Zykluszeit in der PESOL Produktion und führt damit zu einer optimierten Fertigung der Polyetheresterpolyole.

Gemäß einer weiteren Ausführungsform betrifft die vorliegende Erfindung demgemäß auch ein Verfahren wie oben beschrieben, wobei die Komponente (b11) aus Terephthalsäure oder Polyethylenterephthalat (PET) oder Gemischen daraus besteht.

Sollten Derivate der aromatischen Dicarbonsäuren verwendet werden, wie z.B. Polyethylenterephthalat (PET), Polybutylenterephthalat (PBT), so ist der Anteil der aromatischen Dicarbonsäuren als Bestandteil der Komponente b11) zu berücksichtigen. Der Glykol-Anteil des Polyethylenterephthalat (PET), Polybutylenterephthalat (PBT) ist als Bestandteil der Komponente b3) zu berücksichtigen. Sollten Derivate verwendet werden so ist die Verwendung von Polyethylenterephthalat (PET) bevorzugt, dabei sind entsprechend 77 Gew.-% der Masse des eingesetzten Polyethylenterephthalat (PET), d.h. der Anteil der aromatischen Dicarbonsäuren des Polyethylenterephthalat (PET), als Bestandteil der Komponente b11) zu berücksichtigen. Die verbleibenden 23 Gew.-% der Masse des eingesetzten Polyethylenterephthalat (PET) sind als Bestandteil der Komponente b3) zu berücksichtigen.

Die aromatischen Dicarbonsäuren oder deren Derivate der Komponente b11) werden besonders bevorzugt aus den vorgenannten aromatischen Dicarbonsäuren bzw.

Dicarbonsäurederivaten und im speziellen aus Terephthalsäure und/oder Polyethylenterephthalat (PET) ausgewählt. Terephthalsäure und/oder Polyethylenterephthalat (PET) in Komponente b11) führt zu Polyetherestern B) mit besonders guten Brandschutzeigenschaften.

Gemäß einer weiteren Ausführungsform betrifft die vorliegende Erfindung demgemäß auch ein Verfahren wie oben beschrieben, wobei die Komponente (b11) aus Polyethylenterephthalat (PET), Polybutylenterephthalat (PBT) oder einer Mischung davon mit Terephthalsäure besteht. Gemäß einer weiteren Ausführungsform betrifft die vorliegende Erfindung demgemäß auch eine Polyolkomponente wie oben beschrieben, wobei die Komponente (b11) aus Polyethylenterephthalat (PET), Polybutylenterephthalat (PBT) oder einer Mischung davon mit Terephthalsäure besteht.

Im Allgemeinen sind aliphatische Dicarbonsäuren oder-derivate (Komponente b12) zu 0 bis 30 Gew.-% bevorzugt 0 bis 10 Gew.-% in der Dicarbonsäurezusammensetzung b1) enthalten. Besonders bevorzugt enthält die Dicarbonsäurezusammensetzung b1) keine aliphatischen Dicarbonsäuren oder Derivate derselben und besteht somit zu 100 Gew.-% aus einer oder mehreren aromatischen Dicarbonsäuren oder deren Derivate, wobei die vorgenannten bevorzugt sind.

Gemäß einer weiteren Ausführungsform betrifft die vorliegende Erfindung demgemäß auch ein Verfahren wie oben beschrieben, wobei die Dicarbonsäurezusammensetzung (b1) aliphatische Dicarbonsäuren oder -derivate (Komponente b12) in einer Menge im Bereich von 0 bis 10 Gew.-% enthält, bezogen auf die Dicarbonsäurezusammensetzung (b1). Gemäß einer weiteren Ausführungsform betrifft die vorliegende Erfindung demgemäß auch eine Polyolkomponente wie oben beschrieben, wobei die Dicarbonsäurezusammensetzung (b1) aliphatische Dicarbonsäuren oder -derivate (Komponente b12) in einer Menge im Bereich von 0 bis 10 Gew.-% enthält, bezogen auf die Dicarbonsäurezusammensetzung (b1).

Vorzugsweise wird die Komponente b1) in Mengen von 15 bis 60 Gew.-%, besonders bevorzugt 18 bis 55 Gew.-%, insbesondere 20 bis 50 Gew.-%, spezifisch bevorzugt 22 bis 45 Gew.-% und im Speziellen 24 bis 40 Gew.-% bezogen auf bezogen auf die Summe der Komponenten b1) bis b4) eingesetzt.

Vorzugsweise wird die Komponente b2) in Mengen von 1 bis 25 Gew.-%, besonders bevorzugt 2 bis 20 Gew.-%, insbesondere 4 bis 19 Gew.-%, spezifisch bevorzugt 6 bis 18 Gew.-% und im Speziellen 8 bis 17 Gew.-% bezogen auf bezogen auf die Summe der Komponenten b1) bis b4) eingesetzt.

Vorzugsweise wird die Komponente b3) in Mengen von 3 bis 60 Gew.-%, besonders bevorzugt 4 bis 55 Gew.-%, insbesondere 6 bis 50 Gew.-%, spezifisch bevorzugt 8 bis 45 Gew.-% und im Speziellen 10 bis 40 Gew.-% bezogen auf die Summe der Komponenten b1) bis b4) eingesetzt.

Vorzugsweise wird die Komponente b4) in Mengen von 15 bis 60 Gew.-%, besonders bevorzugt 20 bis 55 Gew.-%, insbesondere 25 bis 50 Gew.-% und im Speziellen 30 bis 45 Gew.-% bezogen auf die Summe der Komponenten b1) bis b4) eingesetzt.

In einer Ausführungsform der Erfindung besteht die Fettsäure oder das Fettsäurederivat b2) aus einer Fettsäure bzw. Fettsäuremischung, einem oder mehreren Glycerin-Estern von Fettsäuren, bzw. von Fettsäuremischungen und/oder einem oder mehreren Fettsäuremonoestern, wie beispielsweise Biodiesel oder Methylestern von Fettsäuren, besonders bevorzugt besteht die Komponente b2) aus einer Fettsäure bzw. Fettsäuremischung und/oder einem oder mehreren Fettsäuremonoestern, spezifischer besteht die Komponente b2) aus einer Fettsäure bzw. Fettsäuremischung.

In einer bevorzugten Ausführungsform der Erfindung ist die Fettsäure oder das Fettsäurederivat b2) ausgewählt aus der Gruppe bestehend aus Rizinusöl, Polyhydroxyfettsäuren, Ricinolsäure, Hydroxyl-modifizierte Öle, Weintraubenkernöl, schwarzem Kümmelöl, Kürbiskernöl, Borretschsamenöl, Sojabohnenöl, Weizensamenöl, Rapsöl, Sonnen¬blumenkernöl, Erdnussöl, Aprikosenkernöl, Pistazienöl, Mandelöl, Olivenöl, Macadamianussöl, Avocadoöl, Sanddornöl, Sesamöl, Hanföl, Haselnussöl, Primelöl, Wildrosenöl, Distelöl, Walnussöl, tierischem Talg, wie beispielsweise Rindertalg, Fettsäuren, Hydroxyl-modifizierten Fettsäuren, Biodiesel, Methylestern von Fettsäuren und Fettsäureestern basierend auf Miyristoleinsäure, Palmitoleinsäure, Ölsäure, Vaccen¬säure, Petroselinsäure, Gadoleinsäure, Erukasäure, Nervonsäure, Linolsäure, α- und γ-Linolensäure, Stearidonsäure, Arachidonsäure, Timnodonsäure, Clupanodonsäure und Cervonsäure.

In einer besonders bevorzugten Ausführungsform der vorliegenden Erfindung ist die Fettsäure oder das Fettsäurederivat b2) Ölsäure, Stearinsäure, Biodiesel, Sojaöl, Rapsöl, Sonnenblumenöl oder Talg, besonders bevorzugt Ölsäure, Stearinsäure, Sojaöl, Rapsöl, Sonnenblumenöl oder Rindertalg, spezifischer Ölsäure und im speziellen Ölsäure und Stearinsäure, besonders bevorzug Ölsäure. Die Fettsäure oder das Fettsäurederivat verbessert unter anderem die Treibmittellöslichkeit bei der Herstellung von Polyurethanhartschaumstoffen.

Ganz besonders bevorzugt umfasst Komponente b2) kein Triglycerid, insbesondere kein Öl oder Fett. Das durch die Veresterung bzw. Umesterung freiwerdende Glycerin aus dem Triglycerid verschlechtert wie oben ausgeführt die Maßhaltigkeit des Hartschaums. Bevorzugte Fettsäuren und Fettsäurederivate sind im Rahmen von Komponente b2) insofern die Fettsäuren selbst.

Gemäß einer weiteren Ausführungsform betrifft die vorliegende Erfindung demgemäß auch ein Verfahren wie oben beschrieben, wobei die Komponente b2) frei ist von Triglycerid. Gemäß einer weiteren Ausführungsform betrifft die vorliegende Erfindung auch eine Polyolkomponente wie oben beschrieben, wobei die Komponente b2) frei ist von Triglycerid.

Vorzugsweise ist das aliphatische oder cycloaliphatische Diol b3) ausgewählt aus der Gruppe bestehend aus Ethylenglykol, Diethylenglykol, Propylenglykol, 1,3-Propandiol, 1,4-Butandiol, 1,5-Pentandiol, 1,6-Hexandiol, 2-Methyl-1,3-propandiol und 3-Methyl-1,5-pentandiol und Alkoxylaten derselben. Besonders bevorzugt ist das aliphatische Diol b3) ausgewählt aus der Gruppe bestehend aus Monoethylenglykol, Diethylenglykol und Alkoxylaten derselben, insbesondere bevorzugt ist das aliphatische Diol b3) ausgewählt aus der Gruppe bestehend aus Monoethylenglykol, Diethylenglykol und Ethoxylaten derselben. Besonders bevorzugt ist das aliphatische Diol b3) Monoethylenglykol oder Diethylenglykol, insbesondere Diethylenglykol.

Sollten Derivate von aromatischen Dicarbonsäuren verwendet werden, wie z.B. Polyethylenterephthalat (PET), Polybuthylenterephthalat (PBT), so ist der Glykol-Anteil des Polyethylenterephthalat (PET), Polybutylenterephthalat (PBT) als Bestandteil der Komponente b3) zu berücksichtigen. Sollten Derivate verwendet werden so ist die Verwendung von Polyethylenterephthalat (PET) bevorzugt, dabei sind entsprechend 23 Gew.-% der Masse des eingesetzten Polyethylenterephthalat (PET), d.h. der Anteil der aromatischen Dicarbonsäuren des Polyethylenterephthalat (PET), als Bestandteil der Komponente b3) zu berücksichtigen.

Komponente b4) besteht aus einer Mischung enthaltend
b41) ein Polyetherpolyol mit einer Funktionalität größer oder gleich 2, hergestellt durch Alkoxylierung eines Polyols mit einer Funktionalität größer 2 sowie optional
b42) nicht-alkoxyliertem Polyol mit einer Funktionalität größer 2,
wobei das Verhältnis von alkoxyliertem Polyetherpolyol b41) zu nicht-alkoxyliertem Polyol b42) größer 0,5, vorzugsweise größer 0,8, bevorzugt größer 1, besonders bevorzugt größer 1,5, spezifischer größer 2, noch spezifischer größer 3 ist. Im Speziellen besteht die Komponente b4) ausschließlich aus Polyetherpolyol mit einer Funktionalität größer oder gleich 2, hergestellt durch Alkoxylierung eines Polyols mit einer Funktionalität größer 2 (Komponente b41) und beinhaltet somit kein nicht-alkoxyliertes Poylol (Komponente b42).

Vorzugsweise ist das nicht-alkoxylierte Polyol mit einer Funktionalität größer 2 (Komponente b42) ausgewählt aus der Gruppe bestehend aus Polyglycerin, Glycerin, Trimethylolpropan (TMP) und Pentaerythritol. Besonders bevorzugt ist das nicht-alkoxylierte Polyol mit einer Funktionalität größer 2 (Komponente b42) ausgewählt aus der Gruppe bestehend aus Glycerin, Trimethylolpropan (TMP) und Pentaerythritol, insbesondere bevorzugt ist das das nicht-alkoxylierte Polyol mit einer Funktionalität größer 2 (Komponente b42) ausgewählt aus der Gruppe bestehend aus Glycerin und Trimethylolpropan (TMP) und im Spezifischen wird als nicht-alkoxyliertes Polyol mit einer Funktionalität größer 2 (Komponente b42) Glycerin eingesetzt. In einer besonders bevorzugten Ausführungsform der vorliegenden Erfindung wird kein nicht-alkoxyliertes Polyol mit einer Funktionalität größer 2 (Komponenten b42) verwendet.

Komponente b41) kann insbesondere mit Hilfe eines basischen Katalysators, z.B. KOH oder Aminkatalysatoren hergestellt werden. Im Fall der Verwendung von KOH muss das so hergestellte Polyetherpolyol vor der Verwendung in der Veresterung durch Säurezugabe neutralisiert werden. Gebräuchliche Säuren sind beispielsweise Phosphorsäure, Kohlensäure, Salzsäure, oder Carbonsäuren. In einer bevorzugten Ausführungsform der vorliegenden Erfindung wird ein Aminkatalysator zur Herstellung des Polyetherols b41) verwendet und der so hergestellte Polyether wird ohne Neutralisation in der Veresterung verwendet. In einer besonders bevorzugten Ausführungsform er vorliegenden Erfindung ist der Amin¬katalysator zur Herstellung der Komponente b41) ausgewählt aus der Gruppe enthaltend Dimethylethanolamin (DMEOA), Imidazol und Imidazolderivate sowie Mischungen daraus, besonders bevorzugt Imidazol.

Vorzugsweise wird das Polyetherpolyol b41) ausgewählt aus der Gruppe bestehend aus den Umsetzungsprodukten von Glycerin, Trimethylolpropan (TMP) oder Pentaerythritol mit einem Alkylenoxid.

Erfindungsgemäß weist das Polyetherpolyol b41) eine Funktionalität von größer als 2 auf. Vorzugsweise weist es eine Funktionalität größer oder gleich 2,7, insbesondere größer oder gleich 2,9 auf. Im Allgemeinen weist es eine Funktionalität von kleiner oder gleich 6, bevorzugt kleiner oder gleich 5, besonders bevorzugt kleiner oder gleich 4 auf.

In einer Ausführungsform der vorliegenden Erfindung ist das Polyetherpolyol b41) erhältlich durch Umsetzung eines Polyols mit einer Funktionalität von größer als 2 mit Ethylenoxid und/ oder Propylenoxid, bevorzugt mit Ethylenoxid. Besonders bevorzugt ist das Polyetherpolyol b41) erhältlich durch Alkoxylierung mit Ethylenoxid, was zu Polyurethan-Hartschaumstoffen mit verbesserten Brandschutzeigenschaften führt.

Vorzugsweise ist das Polyetherpolyol b41) erhältlich durch Alkoxylierung, vorzugsweise Ethoxylierung, eines Polyols, ausgewählt aus der Gruppe bestehend aus Sorbit, Pentaerythrit, Trimethylolpropan, Glycerin, Polyglycerin und deren Gemischen, besonders bevorzugt eines Polyols, ausgewählt aus der Gruppe bestehend aus Trimethylolpropan und Glycerin.

In einer speziellen Ausführungsform der Erfindung besteht das Polyetherpolyol b41) aus dem Umsetzungsprodukt von Glycerin mit Ethylenoxid und/ oder Propylenoxid, bevorzugt mit Ethylenoxid. Hierdurch ergibt sich eine besonders hohe Lagerstabilität der Komponente B.

Gemäß einer weiteren Ausführungsform betrifft die vorliegende Erfindung demgemäß auch ein Verfahren wie oben beschrieben, wobei das Polyetherpolyol b41) aus dem Umsetzungsprodukt von Glycerin mit Ethylenoxid und/ oder Propylenoxid besteht, bevorzugt mit Ethylenoxid.

Vorzugsweise weist das Polyetherpolyol b41) eine OH-Zahl im Bereich von 150 bis 1250 mg KOH/g, bevorzugt 300 bis 950 mg KOH/g, besonders bevorzugt 500 bis 800 mg KOH/g auf. In diesem Bereich lassen sich besonders günstige mechanische Eigenschaften sowie Brandschutzeigenschaften erzielen.

Vorzugsweise werden pro kg Polyetheresterpolyol B) mindestens 200 mmol, besonders bevorzugt mindestens 400 mmol, insbesondere bevorzugt mindestens 600 mmol, speziell bevorzugt mindestens 800 mmol, im speziellen mindestens 1000 mmol der Komponente b4) verwendet.

In einer besonders bevorzugten Ausführungsform der Erfindung besteht das Polyetherpolyol b4) aus dem Umsetzungsprodukt von Trimethylolpropan oder Glycerin, bevorzugt Glycerin, mit Ethylenoxid, wobei die OH-Zahl des Polyetherpolyols b4) im Bereich von 500 bis 800 mg KOH/g, bevorzugt 500 bis 650 mg KOH/g, liegt.

In einer insbesondere bevorzugten Ausführungsform der Erfindung besteht das Polyetherpolyol b4) aus dem Umsetzungsprodukt von Trimethylolpropan oder Glycerin, bevorzugt Glycerin, mit Ethylenoxid, wobei die OH-Zahl des Polyetherpolyols b4) im Bereich von 500 bis 800 mg KOH/g, bevorzugt 500 bis 650 mg KOH/g liegt, und das aliphatische oder cycloaliphatische Diol b3) ist Diethylenglykol, und die Fettsäure oder das Fettsäurederivat b2) ist Ölsäure.

Vorzugsweise weist das Polyetheresterpolyol B) eine zahlengewichtete mittlere Funktionalität von größer oder gleich 1,8, bevorzugt von größer als 2, besonders bevorzugt von größer als 2,2 und insbesondere von größer als 2,3 auf, was zu einer höheren Vernetzungsdichte des damit hergestellten Polyurethans und damit zu besseren mechanischen Eigenschaften des Polyurethanschaums führt.

Zur Herstellung der Polyetheresterpolyole können die aliphatischen und aromatischen Polycarbonsäuren und/oder -derivate und mehrwertigen Alkohole katalysatorfrei oder vorzugsweise in Gegenwart von Veresterungskatalysatoren, zweckmäßigerweise in einer Atmosphäre aus Inertgas wie Stickstoff in der Schmelze bei Temperaturen von 150 bis 280°C, vorzugsweise 180 bis 260°C gegebenenfalls unter vermindertem Druck bis zu der gewünschten Säurezahl, die vorteilhafterweise kleiner als 10, vorzugsweise kleiner als 2 ist, polykondensiert werden. Nach einer bevorzugten Ausführungsform wird das Veresterungsgemisch bei den oben genannten Temperaturen bis zu einer Säurezahl von 80 bis 20, vorzugsweise 40 bis 20, unter Normaldruck und anschließend unter einem Druck von kleiner als 500 mbar, vorzugsweise 40 bis 400 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie z.B. Benzol, Toluol, Xylol oder Chlorbenzol, zur azeotropen Abdestillation des Kondensationswassers durchgeführt werden.

Zur Herstellung der Polyetheresterpolyole werden die organischen Polycarbonsäuren und/oder -derivate und mehrwertigen Alkohole vorteilhafterweise im Molverhältnis von 1 : 1 bis 2,2, vorzugsweise 1 : 1,05 bis 2,1 und besonders bevorzugt 1 : 1,1 bis 2,0 polykondensiert.

Die erhaltenen Polyetheresterpolyole weisen im Allgemeinen ein zahlenmittleres Molekulargewicht von 300 bis 3000, vorzugsweise 400 bis 1000 und insbesondere 450 bis 800 auf.

Im Allgemeinen ist der Anteil der erfindungsgemäßen Polyetheresterpolyole B) mindestens 20 Gew.-%, bevorzugt mindestens 40 Gew.-%, besonders bevorzugt mindestens 50 Gew.-% und im Speziellen mindestens 65 Gew.-% bezogen auf die Summe der Komponenten B) bis I).

Zur Herstellung der Polyurethan-Hartschaumstoffe nach dem erfindungsgemäßen Verfahren finden, neben den oben beschriebenen speziellen Polyesterpolyolen (Polyether¬esterpolyole B), die an sich bekannten Aufbaukomponenten Verwendung, zu denen im Einzelnen folgendes auszuführen ist.

### Komponente C

Die gegebenenfalls verwendeten Polyesterpolyole C), die sich von den Polyetheresterpolyolen B) unterscheiden, können beispielsweise aus organischen Dicarbonsäuren mit 2 bis 12 Kohlenstoffatomen, vorzugsweise aromatischen, oder Gemischen aus aromatischen und aliphatischen Dicarbonsäuren und mehrwertigen Alkoholen, vorzugsweise Diolen, mit 2 bis 12 Kohlenstoffatomen, vorzugsweise 2 bis 6 Kohlenstoffatomen hergestellt werden.

Als Dicarbonsäuren kommen insbesondere in Betracht: Bernsteinsäure, Glutarsäure, Adipinsäure, Korksäure, Azelainsäure, Sebazinsäure, Decandicarbonsäure, Maleinsäure, Fumarsäure, Phthalsäure, Isophthalsäure und Terephthalsäure. Verwendet werden können ebenso Derivate dieser Dicarbonsäuren, wie beispielsweise Dimethylterephthalat. Die Dicarbonsäuren können dabei sowohl einzeln als auch im Gemisch verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden. Als aromatische Dicarbonsäuren werden vorzugsweise Phthalsäure, Phthalsäureanhydrid, Terephthalsäure und/oder Isophthalsäure im Gemisch oder alleine verwendet. Als aliphatische Dicarbonsäuren werden vorzugsweise Dicarbonsäuregemische aus Bernstein-, Glutar- und Adipinsäure in Mengenverhältnissen von beispielsweise 20 bis 35 : 35 bis 50 : 20 bis 32 Gew.-Teilen, und insbesondere Adipinsäure verwendet. Beispiele für zwei-und mehrwertige Alkohole, insbesondere Diole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin, Trimethylolpropan und Pentaerythritol. Vorzugsweise verwendet werden Ethandiol, Diethylenglykol, 1,4-Butandiol, 1,5-Pentandiol, 1,6-Hexandiol oder Mischungen aus mindestens zwei der genannten Diole, insbesondere Mischungen aus 1,4-Butandiol, 1,5-Pentandiol und 1,6-Hexandiol. Eingesetzt werden können ferner Polyesterpolyole aus Lactonen, z.B. ε-Caprolacton oder Hydroxycarbonsäuren, z.B. ω-Hydroxycapronsäure.

Zur Herstellung der weiteren Polyesterpolyole C) kommen auch biobasierte Ausgangsstoffe und/oder deren Derivate in Frage, wie z. B. Rizinusöl, Polyhydroxyfettsäuren, Ricinolsäure, Hydroxyl-modifizierten Ölen, Weintraubenkernöl, schwarzem Kümmelöl, Kürbiskernöl, Borretschsamenöl, Sojabohnenöl, Weizensamenöl, Rapsöl, Sonnenblumenkernöl, Erdnussöl, Aprikosenkernöl, Pistazienöl, Mandelöl, Olivenöl, Macadamianussöl, Avocadoöl, Sanddornöl, Sesamöl, Hanföl, Haselnussöl, Primelöl, Wildrosenöl, Distelöl, Walnussöl, Fettsäuren, Hydroxyl-modifizierten Fettsäuren und Fettsäureester basierend auf Myristoleinsäure, Palmitoleinsäure, Ölsäure, Vaccensäure, Petroselinsäure, Gadoleinsäure, Erukasäure, Nervonsäure, Linolsäure, α- und γ-Linolensäure, Stearidonsäure, Arachidonsäure, Timnodonsäure, Clupanodonsäure und Cervonsäure.

Im Allgemeinen beträgt das Massenverhältnis der Polyetheresterpolyole B) zu den Polyesterpolyole C) mindestens 0,2, bevorzugt mindestens 0,5, besonders bevorzugt mindestens 1 und insbesondere mindestens 2.

In einer insbesondere bevorzugten Ausführungsform werden keine weiteren Polyesterpolyole C) eingesetzt.

### Komponente D

Die optional verwendeten Polyetherole D) können die nach bekannten Verfahren, beispielsweise durch anionische Polymerisation von einem oder mehreren Alkylenoxiden mit 2 bis 4 Kohlenstoffatomen mit Alkalihydroxiden, wie Natrium- oder Kaliumhydroxid, Alkalialkoholaten, wie Natriummethylat, Natrium- oder Kaliumethylat oder Kaliumisopropylat, oder aminischen Alkoxylierungs-Katalysatoren, wie Dimethylethanolamin (DMEOA), Imidazol und/oder Imidazolderivate, unter Verwendung mindestens eines Startermoleküls, das 2 bis 8, vorzugsweise 2 bis 6 reaktive Wasserstoffatome gebunden enthält, oder durch kationische Polymerisation mit Lewis-Säuren, wie Antimonpentachlorid, Borfluorid-Etherat oder Bleicherde, hergestellt werden.

Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Bevorzugte Alkylenoxide sind Propylenoxid und Ethylenoxid, besonders bevorzugt ist Ethylenoxid.

Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethyl-endia-min, Phenylendiamine, 2,3-, 2,4- und 2,6-Toluylen¬diamin und 4,4'-, 2,4'- und 2,2'-Dia¬mino-diphenylmethan. Besonders bevorzugt sind die genannten diprimären Amine, beispielsweise Ethylendiamin.

Als Startermoleküle kommen ferner in Betracht: Alkanolamine, wie z.B. Ethanolamin, N-Methyl- und N-Ethylethanolamin, Dialkanolamine, wie z.B. Diethanolamin, N-Methyl- und N-Ethyldiethanolamin, und Trialkanolamine, wie z.B. Triethanolamin, und Ammoniak.

Vorzugsweise verwendet werden zwei oder mehrwertige Alkohole, wie Ethandiol, Propandiol-1,2 und -1,3, Diethylenglykol (DEG), Dipropylenglykol, Butandiol-1,4, Hexandiol-1,6, Glycerin, Trimethylolpropan, Pentaerythrit, Sorbit und Saccharose.

Die Polyetherpolyole D), vorzugsweise Polyoxypropylenpolyole und Polyoxyethylenpolyole, besonders bevorzugt Polyoxyethylenpolyole, besitzen eine Funktionalität von vorzugsweise 2 bis 6, besonders bevorzugt 2 bis 4, insbesondere 2 bis 3 und im Speziellen 2 und zahlenmittlere Molekulargewichte von 150 bis 3000 g/mol, vorzugsweise 200 bis 2000 g/mol und insbesondere 250 bis 1000 g/mol.

In einer bevorzugten Ausführungsform der Erfindung wird ein alkoxyliertes Diol, bevorzugt ein ethoxyliertes Diol, beispielsweise ethoxylierter Ethylenglykol, als Polyetherpolyol D) mitverwendet, vorzugsweise handelt es sich dabei um Polyethylenglykol. Gemäß einer weiteren Ausführungsform betrifft die vorliegende Erfindung demgemäß auch ein Verfahren wie oben beschrieben, wobei Polyethylenglykol als Polyetherpolyol D) eingesetzt wird.

In einer speziellen Ausführungsform der Erfindung besteht die Polyetherol-Komponente D) ausschließlich aus Polyethylenglykol, vorzugsweise mit einem zahlenmittleren Molekulargewicht von 250 bis 1000 g/mol.

Im Allgemeinen beträgt der Anteil der Polyetherpolyole D) kleiner 15 Gew.-%, bevorzugt kleiner 10 Gew.-%, besonders bevorzugt kleiner 8 Gew.-%, bezogen auf die Summe der Komponenten B) bis I).

In einer insbesondere bevorzugten Ausführungsform werden keine Polyetherpolyole D) eingesetzt. Gemäß einer weiteren Ausführungsform betrifft die vorliegende Erfindung demgemäß auch ein Verfahren wie oben beschrieben, wobei keine Polyetherpolyole (D) eingesetzt werden.

Gemäß einer weiteren Ausführungsform betrifft die vorliegende Erfindung demgemäß auch eine Polyolkomponente wie oben beschrieben, wobei keine Polyetherpolyole D) eingesetzt werden.

### Komponente E

Als halogenfreies, phosphorhaltiges Flammschutzmittel E) wird mindestens ein phosphorhaltiges Flammschutzmittel verwendet.

Geeignete phosphorhaltige Flammschutzmittel sind beispielsweise Phosphate und Phosphonate aber auch roter Phosphor. Beispielsweise wären zu nennen Dimethylmethanphosphonat, Diethylethanphosphonat (DEEP), Dimethylpropylphosphonat (DMPP), Diethanol-aminomethylphosphonsäurediethylester, Triphethylphosphat (TEP), Diphenylkresylphosphat (DPK), Trienylphosphat (TPP), Ammoniumpolyphosphat (APP), Alkali-oder Erdalkali-Phosphat-Salze sowie Ammoniumphosphat.

Bevorzugte halogenfreie, phosphorhaltige Flammschutzmittel sind Phosphate und/oder roter Phosphor, vorzugsweise Phosphate.

Bevorzugte halogenfreie, phosphorhaltige Flammschutzmittel sind Triethylphosphat (TEP), Diphenylkresylphosphat (DPK), Triphenylphosphat (TPP), Ammoniumpolyphosphat (APP), Alkali- oder Erdalkali-Phosphat-Salze sowie Ammoniumphosphat.

Besonders bevorzugte halogenfreie, phosphorhaltige Flammschutzmittel sind Triethylphosphat (TEP), Diphenylkresylphosphat (DPK), Triphenylphosphat (TPP), Ammoniumpolyphosphat (APP).

Vorzugsweise sind die Flammschutzmittel bei Raumtemperatur flüssig.

Bevorzugte Flammschutzmittel weisen keine mit Isocyanatgruppen reaktive Gruppen auf.

Besonders bevorzugt sind Triethylphosphat (TEP), Diphenylkresylphosphat (DPK), Triphenylphosphat (TPP) und im Speziellen Triethylphosphat (TEP). Gemäß einer weiteren Ausführungsform betrifft die vorliegende Erfindung demgemäß auch ein Verfahren wie oben beschrieben, wobei die Komponente (E) ausgewählt ist aus der Gruppe bestehend aus Triethylphosphat (TEP), Diphenylkresylphosphat (DPK) und Triphenylphosphat (TPP).

Gemäß einer weiteren Ausführungsform betrifft die vorliegende Erfindung demgemäß auch eine Polyolkomponente wie oben beschrieben, wobei die Komponente (E) ausgewählt ist aus der Gruppe bestehend aus Triethylphosphat (TEP), Diphenylkresylphosphat (DPK) und Triphenylphosphat (TPP).

Die halogenfreien, phosphorhaltigen Flammschutzmittel werden vorzugsweise solchen Anteilen verwendet werden, dass der Phosphorgehalt bezogen auf die Summe der Komponenten A) bis I) kleiner oder gleich 1,7 Gew.-% ist, bevorzugt kleiner 1 Gew.-%, noch bevorzugter kleiner 0,7 Gew.-%, besonders bevorzugt kleiner 0,5 Gew.-%, noch bevorzugter kleiner 0,4 Gew.-%, spezifischer kleiner 0,3 Gew.-%, noch spezifischer kleiner 0,25 Gew.-%, spezifisch bevorzugt kleiner 0,2 Gew.-%, weiter bevorzugt kleiner 0,18 Gew.-%, noch spezifischer kleiner 0,16 Gew.-%, darüber hinaus bevorzugt kleiner 0,14 Gew.-% und im Speziellen kleiner 0,12 Gew.-%.

Im Allgemeinen beträgt der Anteil des halogenfreien, phosphorhaltigen Flammschutzmittels E), kleiner 25 Gew.-%, bevorzugt kleiner 15 Gew.-%, besonders bevorzugt kleiner 10 Gew.-%, spezifisch kleiner 8 Gew.-% und im Speziellen kleiner 5 Gew.-% bezogen auf die Komponenten B) bis I).

In einer Ausführungsform der Erfindung wird auf den Einsatz der halogenfreien, phosphorhaltigen Flammschutzmittel (Komponente E) verzichtet. Gemäß einer weiteren Ausführungsform betrifft die vorliegende Erfindung demgemäß auch ein Verfahren wie oben beschrieben, wobei kein halogenfreies, phosphorhaltiges Flammschutzmittel (Komponente E) eingesetzt wird.

Gemäß einer weiteren Ausführungsform betrifft die vorliegende Erfindung demgemäß auch eine Polyolkomponente wie oben beschrieben, wobei kein halogenfreies, phosphorhaltiges Flammschutzmittel (Komponente E) eingesetzt wird.

In einer bevorzugten Ausführungsform beträgt der minimale Phosphorgehalt bezogen auf die Summe der Komponenten A) bis I), der über die halogenfreien, phosphorhaltigen Flammschutzmittel E) dem Schaum zugeführt wird, größer 0,01 Gew.-%, bevorzugt größer 0,03 Gew.-%, besonders bevorzugt größer 0,05 Gew.-% und im Speziellen größer 0,07 Gew.-%.

### Komponente F

Außer den bereits genannten halogenfreien, phosphorhaltigen Flammschutzmittel können gegebenenfalls auch weitere halogenfreie Flammschutzmittel F) in Kombination mit den halogenfreien, phosphorhaltigen Flammschutzmittel genutzt werden.

Als weitere halogenfreie Flammschutzmittel F) kommen beispielweise in Betracht Aluminiumoxidhydrat, Antimontrioxid, Arsenoxid, Calciumsulfat, Blähgraphit oder Cyanursäurederivate, wie z.B. Melamin.

Vorzugweise ist dabei das Verhältnis der Massen der Komponente E) zu Komponente F) größer 0,2, bevorzugt größer 0,5, besonders bevorzugt größer 1, spezifisch größer 2 und besonders spezifisch größer 5.

In eine bevorzugten Ausführungsform der Erfindung wird auf den Einsatz der Komponente F verzichtet, so dass ausschließlich halogenfreie, phosphorhaltige Flammschutzmittel (Komponente E) als Flammschutzmittel eingesetzt werden. Gemäß einer weiteren Ausführungsform betrifft die vorliegende Erfindung demgemäß auch ein Verfahren wie oben beschrieben, wobei kein Flammschutzmittel (F) eingesetzt wird.

Gemäß einer weiteren Ausführungsform betrifft die vorliegende Erfindung demgemäß auch eine Polyolkomponente wie oben beschrieben, wobei kein Flammschutzmittel (F) eingesetzt wird.

### Komponente G

Zu Treibmitteln G), welche zur Herstellung der Polyurethan-Hartschaumstoffe verwendet werden, gehören vorzugsweise Wasser, Ameisensäure und Gemische daraus. Diese reagieren mit Isocyanatgruppen unter Bildung von Kohlendioxid und im Falle von Ameisensäure zu Kohlendioxid und Kohlenstoffmonoxid. Da diese Treibmittel das Gas durch eine chemische Reaktion mit den Isocyanatgruppen freisetzen, werden sie als chemische Treibmittel bezeichnet. Daneben können physikalische Treibmittel wie niedrig siedende Kohlenwasserstoffe eingesetzt werden. Geeignet sind insbesondere Flüssigkeiten, welche gegenüber den Polyisocyanaten A) inert sind und Siedepunkte unter 100 °C, vorzugsweise unter 50 °C bei Atmosphärendruck aufweisen, so dass sie unter dem Einfluss der exothermen Polyadditionsreaktion verdampfen. Beispiele derartiger, vorzugsweise verwendeter Flüssigkeiten sind Alkane, wie Heptan, Hexan, n- und iso-Pentan, vorzugsweise technische Gemische aus n- und iso-Pentanen, n- und iso-Butan und Propan, Cycloalkane, wie Cyclopentan und/oder Cyclohexan, Ether, wie Furan, Dimethylether und Diethylether, Ketone, wie Aceton und Methylethylketon, Carbonsäurealkylester, wie Methylformiat, Dimethyloxalat und Ethylacetat und halogenierte Kohlenwasserstoffe, wie Methylen¬chlorid, Dichlormonofluormethan, Difluormethan, Trifluormethan, Difluorethan, Tetrafluorethan, Chlordifluorethane, 1,1-Dichlor-2,2,2-trifluorethan, 2,2-Dichlor-2-fluorethan und Heptafluorpropan. Auch Gemische dieser niedrigsiedenden Flüssigkeiten untereinander und/oder mit anderen substituierten oder unsubstituierten Kohlenwasserstoffen können verwendet werden. Geeignet sind ferner organische Carbonsäuren, wie z.B. Ameisensäure, Essigsäure, Oxalsäure, Ricinolsäure und carboxylgruppenhaltige Verbindungen.

Vorzugsweise werden keine halogenierten Kohlenwasserstoffe als Treibmittel verwendet.

Vorzugsweise werden als chemische Treibmittel Wasser, Ameisensäure-Wasser-Mischungen oder Ameisensäure verwendet, besonders bevorzugtes chemisches Treibmittel ist Wasser. Vorzugsweise werden als physikalische Treibmittel Pentanisomere, bzw. Mischungen von Pentanisomeren verwendet.

Die chemischen Treibmittel können dabei alleine, d.h. ohne Zusatz von physikalischen Treibmitteln, oder zusammen mit physikalischen Treibmitteln verwendet werden. Vorzugsweise werden die chemischen Treibmittel zusammen mit physikalischen Treibmitteln verwendet, wobei die Verwendung von Wasser zusammen mit Pentanisomeren oder Gemischen aus Pentanisomeren bevorzugt sind.

Die Treibmittel sind entweder ganz oder teilweise in der Polyolkomponente (d.h. Komponenten B+C+D+E+F+G+H+I) gelöst oder werden direkt vor dem Verschäumen der Polyolkomponente über einen Statikmischer zudosiert. Für gewöhnlich liegen Wasser, Ameisensäure-Wasser-Mischungen oder Ameisensäure ganz oder teilweise in der Polyolkomponente gelöst vor und das physikalische Treibmittel (beispielsweise Pentan) und gegebenenfalls der Rest des chemischen Treibmittels wird "online" dosiert.

Die eingesetzte Menge des physikalischen Treibmittels bzw. der physikalischen Treibmittelmischung liegt größer 1 Gew.-%, vorzugsweise größer 2 Gew.-%, besonders bevorzugt größer 2,5 Gew.-%, spezifischer größer 3 Gew.-%, noch spezifischer größer 3,8 Gew.-% und im Speziellen größer 4,5 Gew.-%, jeweils bezogen auf die Summe der Komponenten A) bis I).

Die eingesetzte Menge des physikalischen Treibmittels bzw. der physikalischen Treibmittelmischung liegt dabei kleiner 10 Gew.-%, vorzugsweise kleiner 8 Gew.-%, besonders bevorzugt kleiner 7 Gew.-%, spezifischer kleiner 6,5 Gew.-%, noch spezifischer kleiner 6 Gew.-% und im Speziellen kleiner 5,5 Gew.-%, jeweils bezogen auf die Summe der Komponenten B) bis I).

Die eingesetzte Menge des Treibmittels bzw. der Treibmittelmischung liegt bei 1 bis 45 Gew.-%, vorzugsweise 1 bis 40 Gew.-%, besonders bevorzugt 1,5 bis 35 Gew.-%, jeweils bezogen auf die Summe der Komponenten B) bis I).

Dient Wasser, Ameisensäure oder eine Ameisensäure-Wasser-Mischung als Treibmittel, so wird es vorzugsweise in einer Menge von 0,05 bis 2 Gew.-%, bezogen auf die Summe der Komponenten A) bis I), zugesetzt. Der Zusatz des Wassers, der Ameisensäure oder der Ameisensäure-Wasser-Mischung kann in Kombination mit dem Einsatz der anderen beschriebenen Treibmittel erfolgen. Bevorzugt wird Ameisensäure oder eine Ameisensäure-Wasser-Mischung in Kombination mit Pentan eingesetzt.

In einer bevorzugten Ausführungsform wird die Einsatzmenge der Komponente G so gewählt, dass die Kernrohdichte des durch Vermischen der Komponenten A) bis I) entstehenden Hartschaumstoffs kleiner 50 g/l, bevorzugt kleiner 40 g/l ist, besonders bevorzugt kleiner 48 g/l, spezifischer kleiner 35 g/l, noch spezifischer kleiner 33 g/l, speziell kleiner 31 g/l, noch spezieller kleiner 29 g/l und im Speziellen kleiner 28 g/l.

In einer ferner bevorzugten Ausführungsform ist das Verhältnis der Masse des physikalischen Treibmittels, d.h. der Masse des verwendeten Pentanisomeren oder des Gemisches aus Pentanisomeren, zu der des halogenfreien, phosphorhaltigen Flammschutzmittels E) größer 0,4, bevorzugt größer 0,5, noch bevorzugter größer 0,8, besonders bevorzugt größer 1, noch bevorzugter größer 1,5, spezifischer größer 1,8, noch spezifischer größer 2, spezifisch bevorzugt größer 2,4, weiter bevorzugt größer 2,7, noch spezifischer größer 3, darüber hinaus bevorzugt größer 3,2 und im Speziellen größer 3,6.

Im Allgemeinen liegt das Verhältnis der Masse des physikalischen Treibmittels, d.h. der Masse des verwendeten Pentanisomeren oder des Gemisches aus Pentanisomeren, zu der des Phosphors, welcher über das zugefügte halogenfreie, phosphorhaltige Flammschutzmittels E) zugeführt wird, größer 2,4, bevorzugt größer 3,5, noch bevorzugter größer 4,4, besonders bevorzugt größer 5,8, noch bevorzugter größer 6,5, spezifischer größer 8,5, noch spezifischer größer 11, spezifisch bevorzugt größer 13, noch bevorzugter größer 15, noch spezifischer größer 17,5, darüber hinaus bevorzugt größer 20 und im Speziellen größer 22.

### Komponente H

Als Katalysatoren H) zur Herstellung der Polyurethan-Hartschaumstoffe werden insbesondere Verbindungen verwendet, die die Reaktion der reaktiven Wasserstoffatome, insbesondere Hydroxylgruppen, enthaltenden Verbindungen der Komponenten B) bis I) mit den Polyisocyanaten A) stark beschleunigen.

Zweckmäßigerweise verwendet werden basische Polyurethankatalysatoren, beispielsweise tertiäre Amine, wie Triethylamin, Tributylamin, Dimethylbenzylamin, Dicyclohexylmethylamin, Dimethylcyclohexylamin, N,N,N',N'-Tetramethyldiaminodiethylether, Bis-(dimethylaminopropyl)-harnstoff, N-Methyl- bzw. N-Ethylmorpholin, N-Cyclohexyl-morpholin, N,N,N',N'-Tetrame¬thylethylendiamin, N,N,N,N-Tetramethylbutandiamin, N,N,N,N-Tetramethylhexandiamin-1,6, Pentamethyldiethylentriamin, Bis(2-dimethylaminoethyl)ether, Dimethylpiperazin, N-Dimethyl-aminoethylpiperidin, 1,2-Dimethylimidazol, 1-Azabicyclo-(2,2,0)-octan, 1,4.Diazabicyclo.¬(2,2,2).octan(Dabco) und Alkanolaminverbindungen, wie Triethanolamin, Triisopropanolamin, N-Methyl- und N-Ethyldiethanolamin, Dimethylaminoethanol, 2-(N,N-Dimethylaminoethoxy)-'ethanol, N,N',N"-Tris-(dialkylaminoalkyl)hexahydrotriazine, z.B. N,N',N"-Tris-(dimethylamino¬propyl)-s-hexahydrotriazin, und Triethylendiamin. Geeignet sind jedoch auch Metallsalze, wie Eisen(II)-chlorid, Zinkchlorid, Bleioctoat und vorzugsweise Zinnsalze, wie Zinndioctoat, Zinndiethylhexoat und Dibutylzinndilaurat sowie insbesondere Mischungen aus tertiären Aminen und organischen Zinnsalzen.

Als Katalysatoren kommen ferner in Betracht: Amidine, wie 2,3-Dimethyl-3,4,5,6-tetrahydropyrimidin, Tetraalkylammoniumhydroxide, wie Tetramethylammoniumhydroxid, Alkalihydroxide, wie Natriumhydroxid und Alkalialkoholate, wie Natrium¬methylat und Kaliumisopropylat, Alkalicarboxylate sowie Alkalisalze von langkettigen Fettsäuren mit 10 bis 20 C-Atomen und gegebenenfalls seitenständigen OH-Gruppen.

Wird beim Verschäumen ein größerer Polyisocyanatüberschuss verwendet, kommen als Katalysatoren für die Trimerisierungsreaktion der überschüssigen NCO-Gruppen untereinander ferner in Betracht: Isocyanuratgruppen bildende Katalysatoren, beispielsweise Ammoniumionen- oder Alkalimetallsalze, speziell Ammonium- oder Alkalimetallcarboxylate, alleine oder in Kombination mit tertiären Aminen. Die Isocyanurat-Bildung führt zu flammwidrigen PIR-Schaumstoffen, welche bevorzugt im technischen Hartschaum, beispielsweise im Bauwesen als Dämmplatte oder Sandwichelemente, eingesetzt werden.

In eine bevorzugten Ausführungsform der Erfindung werde basische Treibkatalysatoren mit der Struktur

X-CH₂-CH₂-Y-CH₂-CH₂-Z,

mit X ausgewählt aus den chemisch funktionellen Gruppen NH₂; NR₂; NHR; OH, O-R; Y ausgewählt aus den chemisch funktionellen Gruppen O; NH; NR und Z ausgewählt aus den chemisch funktionellen Gruppen NH₂; NR₂; NHR; OH, O-R zusammen mit Ammonium- oder Alkalimetallsalzen von Carbonsäuren verwendet.

Dabei ist jedes R unabhängig von jedem anderen R wählbar und stellt einen beliebig aufgebauten organischen Rest mit mindestens einem C-Atom dar. Vorzugsweise ist R eine Alkylgruppe mit 1 bis 12 C-Atomen, besonders bevorzugt Methyl und Ethyl, insbesondere Methyl.

Diesen Katalysatoren können auch weitere katalytisch aktive Verbindungen beigefügt werden. Vorzugsweise handelt es sich dabei um aminische Katalysatoren, besonders bevorzugt werden jedoch keine weiteren Katalysatoren zugefügt, so dass als Katalysatoren H) nur basische Treibkatalysatoren in Kombination mit Ammonium- oder Alkalimetallsalzen von Carbonsäuren verwendet werden.

Vorzugsweise werde als basischen Treibkatalysatoren eine oder mehrere Verbindungen gemäß folgender Struktur eingesetzt:

(CH₃)₂N-CH₂-CH₂-Y-CH₂-CH₂-Z,

wobei Z = N(CH₃)₂; N(CH₂-CH₂-N(CH₃)₂) oder OH, vorzugsweise Z = N(CH₃)₂ oder OH, besonders bevorzugt Z = N(CH₃)₂
und wobei Y = N-CH₃, N-CH₂-CH₂-N(CH₃)₂ oder O, vorzugsweise Y = N-CH₃ oder O, besonders bevorzugt Y = N-CH₃.

Bevorzugte Ammonium- oder Alkalimetallsalzen von Carbonsäuren sind insbesondere Natrium-, Kalium- und Ammoniumcarboxylate. Bevorzugte Carboxylate sind Formiate, Octoate und Acetate, insbesondere Formiat und Acetat, speziell Acetat.

Besonders bevorzugt ist damit die Verwendung eine Katalysatormischung bestehend aus Pentamethyldiethylentriamin und/oder Bis(2-dimethylaminoethyl)ether mit Kalium-Acetat und/oder Kalium-Formiat, vorzugsweise Pentamethyldiethylentriamin mit Kalium-Acetat.

Weitere Angaben zu den genannten und weitere Ausgangsstoffe können der Fachliteratur, beispielsweise dem Kunststoffhandbuch, Band VII, Polyurethane, Carl Hanser Verlag München, Wien, 1., 2. und 3. Auflage 1966, 1983 und 1993, entnommen werden.

### Komponente I

Der Reaktionsmischung zur Herstellung der Polyurethan-Hartschaumstoffe können gegebenenfalls noch weitere Hilfsmittel und/oder Zusatzstoffe I) zugesetzt werden. Genannt seien beispielsweise oberflächenaktive Substanzen, Schaumstabilisatoren, Zellregler, Füllstoffe, Farbstoffe, Pigmente, Hydrolyseschutzmittel, fungistatische und bakteriostatisch wirkende Substanzen.

Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur der Kunststoffe zu regulieren. Genannt seien beispielsweise Emulgatoren, wie die Natriumsalze von Ricinusölsulfaten oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, wie Siloxanoxalkylen-Mischpolymerisate und andere Organopolysiloxane, oxethylierte Alkylphenole, oxethylierte Fettalkohole, Paraffin¬öle, Ricinusöl- bzw. Ricinolsäureester, Türkischrotöl und Erdnussöl, und Zellregler, wie Paraffine, Fettalkohole und Dimethylpolysiloxane. Zur Verbesserung der Emulgier¬wir¬kung, der Zellstruktur und/oder Stabilisierung des Schaumes eignen sich ferner oligomere Acrylate mit Polyoxyalkylen- und Fluoralkanresten als Seitengruppen. Die oberflächenaktiven Substanzen werden üblicherweise in Mengen von 0,01 bis 10 Gew.-teile, bezogen (d. h. gerechnet) auf 100 Gew.-Teile der Komponente B), angewandt.

Als Füllstoffe, insbesondere verstärkend wirkende Füllstoffe, sind die an sich bekannten, üblichen organischen und anorganischen Füllstoffe, Verstärkungsmittel, Beschwerungsmittel, Mittel zur Verbesserung des Abriebverhaltens in Anstrichfarben, Beschichtungsmittel usw. zu verstehen. Im Einzelnen seien beispielhaft genannt: anorganische Füllstoffe wie silikatische Mineralien, beispielsweise Schichtsilikate wie Antigorit, Serpentin, Hornblenden, Amphibole, Chrisotil und Talkum, Metalloxide, wie Kaolin, Aluminiumoxide, Titanoxide und Eisenoxide, Metallsalze, wie Kreide, Schwerspat und anorganische Pigmente, wie Cadmiumsulfid und Zinksulfid, sowie Glas u.a. Vorzugsweise verwendet werden Kaolin (China Clay), Aluminiumsilikat und Copräzipitate aus Bariumsulfat und Aluminiumsilikat sowie natürliche und synthetische faserförmige Mineralien wie Wollastonit, Metall- und insbesondere Glasfasern verschiedener Länge, die gegebenenfalls geschlichtet sein können. Als organische Füllstoffe kommen beispielsweise in Betracht: Kohle, Melamin, Kollophonium, Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestern und insbesondere Kohlenstofffasern.

Die anorganischen und organischen Füllstoffe können einzeln oder als Gemische verwendet werden und werden der Reaktionsmischung vorteilhafterweise in Mengen von 0,5 bis 50 Gew.-%, vorzugsweise 1 bis 40 Gew.-%, bezogen auf das Gewicht der Komponenten A) bis I), zugegeben, wobei jedoch der Gehalt an Matten, Vliesen und Geweben aus natürlichen und synthetischen Fasern Werte bis 80 Gew.-%, bezogen auf das Gewicht der Komponenten A) bis I), erreichen kann.

Nähere Angaben über die oben genannten anderen üblichen Hilfs- und Zusatzstoffe sind der Fachliteratur, beispielsweise der Monographie von J.H. Saunders und K.C. Frisch "High Polymers" Band XVI, Polyurethanes, Teil 1 und 2, Verlag Interscience Publishers 1962 bzw. 1964, oder dem Kunststoff-Handbuch, Polyurethane, Band VII, Hanser-Verlag, München, Wien, 1. und 2. Auflage, 1966 und 1983 zu entnehmen.

Ein weiterer Gegenstand der vorliegenden Erfindung ist eine Polyolkomponente enthaltend:
10 bis 95 Gew.-% der Polyetheresterpolyole B),
0 bis 60 Gew.-% der weiteren Polyesterpoylole C),
0 bis 35 Gew.-% der Polyetherpolyole D),
0 bis 25 Gew.-% einem halogenfreien, phosphorhaltigen Flammschutzmittel oder einer Mischung aus verschiedenen halogenfreien, phosphorhaltigen Flammschutzmitteln E),
0 bis 25 Gew.-% weiteren halogenfreien Flammschutzmitteln F)
1 bis 45 Gew.-% einem oder mehreren Treibmitteln G),
0,5 bis 10 Gew.-% Katalysatoren H), und
0,5 bis 20 Gew.-% weitere Hilfs- und Zusatzstoffe I),
jeweils wie vorstehend definiert und jeweils bezogen auf das Gesamtgewicht der Komponenten B) bis I), wobei sich die Gew.-% zu 100 Gew.-% ergänzen.

Besonders bevorzugt umfasst die Polyolkomponente
20 bis 95 Gew.-% der Polyetheresterpolyole B),
0 bis 60 Gew.-% der weiteren Polyesterpoylole C),
0 Gew.-% der Polyetherpolyole D),
0 bis 25 Gew.-% einem halogenfreien, phosphorhaltigen Flammschutzmittel oder einer Mischung aus verschiedenen halogenfreien, phosphorhaltigen Flammschutzmitteln E),
0 Gew.-% weiteren halogenfreien Flammschutzmitteln F)
1 bis 45 Gew.-% einem oder mehreren Treibmitteln G),
0,5 bis 10 Gew.-% Katalysatoren H), und
0,5 bis 20 Gew.-% weitere Hilfs- und Zusatzstoffe I),
jeweils wie vorstehend definiert und jeweils bezogen auf das Gesamtgewicht der Komponenten B) bis I), wobei sich die Gew.-% zu 100 Gew.-% ergänzen.

Spezifischer umfasst die Polyolkomponente
50 bis 95 Gew.-% der Polyetheresterpolyole B),
0 Gew.-% der weiteren Polyesterpoylole C),
0 Gew.-% der Polyetherpolyole D),
0 bis 25 Gew.-% einem halogenfreien, phosphorhaltigen Flammschutzmittel oder einer Mischung aus verschiedenen halogenfreien, phosphorhaltigen Flammschutzmitteln E),
0 Gew.-% weiteren halogenfreien Flammschutzmitteln F)
1 bis 45 Gew.-% einem oder mehreren Treibmitteln G),
0,5 bis 10 Gew.-% Katalysatoren H), und
0,5 bis 20 Gew.-% weitere Hilfs- und Zusatzstoffe I),
jeweils wie vorstehend definiert und jeweils bezogen auf das Gesamtgewicht der Komponenten B) bis I), wobei sich die Gew.-% zu 100 Gew.-% ergänzen.

Zur Herstellung der erfindungsgemäßen Polyurethan-Hartschaumstoffe werden die gegebenenfalls modifizierten organischen Polyisocyanate A), die Polyetheresterpolyole B), gegebenenfalls die weiteren Polyesterpolyole C), gegebenenfalls die Polyetherole D), die halogenfreien, phosphorhaltigen Flammschutzmittel E), gegebenenfalls die weiteren halogenfreien Flammschutzmittel F) und die weiteren Komponenten G) bis I) in solchen Mengen vermischt, dass das Äquivalenzverhältnis von NCO-Gruppen der Polyisocyanate A) zur Summe der reaktiven Wasserstoffatome der Komponenten B bis I) größer 2 ist, bevorzugt größer 2,3, besonders bevorzugt größer 2,5, spezifischer größer 2,8, noch spezifischer größer 3, speziell größer 3,2 und im Speziellen größer 3,5.

Die so erzeugten Polyurethan-Hartschaumstoffe weisen eine Flammwidrigkeit nach Euroclass E gemäß EN 13501-1.

Die vorliegende Erfindung betrifft auch Polyurethan-Hartschaumstoffe oder Polyisocyanurat-Hartschaumstoffe, erhältlich oder erhalten nach einem Verfahren wie zuvor beschrieben.

Gemäß einem weiteren Aspekt betriff die vorliegende Erfindung auch die Verwendung eines Polyurethan-Hartschaumstoffs oder Polyisocyanurat-Hartschaumstoffs wie beschrieben zur Herstellung von Sandwich-Elementen.

Weitere Ausführungsformen der vorliegenden Erfindung sind den Ansprüchen und den Beispielen zu entnehmen. Es versteht sich, dass die vorstehend genannten und die nachstehend erläuterten Merkmale des erfindungsgemäßen Gegenstandes/Verfahrens bzw. der erfindungsgemäßen Verwendungen nicht nur in der jeweils angegebenen Kombination, sondern auch in anderen Kombinationen verwendbar sind, ohne den Rahmen der Erfindung zu verlassen. So ist z. B. auch die Kombination von einem bevorzugten Merkmal mit einem besonders bevorzugten Merkmal, oder eines nicht weiter charakterisierten Merkmals mit einem besonders bevorzugten Merkmal etc. implizit umfasst, auch wenn diese Kombination nicht ausdrücklich erwähnt wird.

Im Folgenden sind beispielhafte Ausführungsformen der vorliegenden Erfindung aufgeführt, wobei diese die vorliegende Erfindung nicht einschränken. Insbesondere umfasst die vorliegende Erfindung auch solche Ausführungsformen, die sich aus den im Folgenden angegebenen Rückbezügen und damit Kombinationen ergeben.
1. Verfahren zur Herstellung von Polyurethan-Hartschaumstoffen oder Polyisocyanurat-Hartschaumstoffen umfassend die Umsetzung von
   A) mindestens einem Polyisocyanat (A),
   B) mindestens einem Polyetheresterpolyol (B), erhältlich durch Veresterung von
      b1) einer Dicarbonsäurezusammensetzung (b1) in einer Menge von 10 bis 80 Gew.-%, enthaltend
         b11) einer oder mehrerer aromatischer Dicarbonsäuren (b11) oder Derivate derselben, in einer Menge von 50 bis 100 Gew.-%, bezogen auf die Dicarbonsäurezusammensetzung (b1), wobei bei Verwendung von aromatischen Dicarbonsäurederivaten nur der Massenanteil der Dicarbonsäure als Komponente (b11) zu berücksichtigen ist,
         b12) einer oder mehrerer aliphatischer Dicarbonsäuren (b12) oder Derivate derselben, in einer Menge von 0 bis 50 Gew.-%, bezogen auf die Dicarbonsäurezusammensetzung (b1),
      b2) einer oder mehrerer Fettsäuren und/oder Fettsäurederivate (b2) in einer Menge von 0 bis 30 Gew.-%,
      b3) eines oder mehrerer aliphatischer oder cycloaliphatischer Diole mit 2 bis 18 C-Atomen (b3) oder Alkoxylate derselben in einer Menge von 2 bis 65 Gew.-%, wobei bei Einsatz von Dicarbonsäurederivaten der Glykolanteil (Gew.-%) des Derivats als Komponenten b3) zu berücksichtigen ist,
      b4) einer Mischung (b4) in einer Menge von 10 bis 70 Gew.-% enthaltend
         b41) ein Polyetherpolyol (b41) mit einer Funktionalität größer oder gleich 2, hergestellt durch Alkoxylierung eines Polyols mit einer Funktionalität größer 2 sowie optional
         b42) nicht-alkoxyliertem Polyol (b41) mit einer Funktionalität größer 2,
         dadurch gekennzeichnet, dass das Verhältnis von alkoxyliertem Polyetherpolyol b41) zu nicht-alkoxyliertem Polyol b42) größer 0,5 ist,
         jeweils bezogen auf die Gesamtmenge der Komponenten b1) bis b4), wobei sich die Komponenten b1) bis b4) zu 100 Gew.-% addieren,
   C) gegebenenfalls weiteren Polyesterpolyolen (C), die sich von denen der Komponente B) unterscheiden,
   D) gegebenenfalls einem Polyetherpolyol (D) oder einer Mischung verschiedener Polyetherpolyole (D), und
   E) gegebenenfalls einem halogenfreien, phosphorhaltigen Flammschutzmittel oder einer Mischung aus verschiedenen halogenfreien, phosphorhaltigen Flammschutzmitteln (E),
   F) gegebenenfalls weiteren halogenfreien Flammschutzmitteln (F),
   G) einem oder mehreren Treibmitteln (G),
   H) Katalysatoren (H), und
   I) gegebenenfalls weiteren Hilfsmitteln oder Zusatzstoffen (I),
   wobei das oder die halogenfreien Flammschutzmittel E) Phosphor enthält, keine Halogenatome enthält und in solchen Anteilen verwendet werden, dass der Phosphorgehalt bezogen auf die Summe der Komponenten A) bis I) kleiner oder gleich 1 Gew.-% ist.
2. Verfahren gemäß Ausführungsform 1, wobei Komponente (A) ausgewählt ist aus der Gruppe bestehend aus
   i) Mehrfunktionelle Isocyanate auf Basis von Toluylendiisocyanat (TDI), insbesondere 2,4-TDI oder 2,6-TDI oder Mischungen aus 2,4- und 2,6-TDI;
   ii) Mehrfunktionelle Isocyanate auf Basis von Diphenylmethandiisocyanat (MDI), insbeson-dere 2,2'-MDI oder 2,4'-MDI oder 4,4'-MDI oder oligomeres MDI, das auch als Polyphe-nylpolymethylenisocyanat bezeichnet wird, oder Mischungen aus zwei oder drei der vor-genannten Diphenylmethandiisocyanate, oder Roh-MDI, welches bei der Herstellung von MDI anfällt, oder Mischungen aus mindestens einem Oligomer des MDI und mindestens einem der vorgenannten niedermolekularen MDI-Derivate; und
   iii) Gemische aus mindestens einem aromatischen Isocyanat gemäß Ausführungsform i) und mindestens einem aromatischen Isocyanat gemäß Ausführungsform ii).
3. Verfahren gemäß einer der Ausführungsformen 1 oder 2, wobei die Komponente (b11) aus Terephthalsäure oder Polyethylenterephthalat (PET) oder Gemischen daraus besteht.
4. Verfahren gemäß einer der Ausführungsformen 1 bis 3, wobei die Komponente (b11) aus Polyethylenterephthalat (PET), Polybutylenterephthalat (PBT) oder einer Mischung davon mit Terephthalsäure besteht.
5. Verfahren gemäß einer der Ausführungsformen 1 bis 4, wobei die Dicarbonsäurezusammensetzung (b1) aliphatische Dicarbonsäuren oder -derivate (Komponente b12) in einer Menge im Bereich von 0 bis 10 Gew.-% enthält, bezogen auf die Dicarbonsäurezusammensetzung (b1).
6. Verfahren gemäß einer der Ausführungsformen 1 bis 5, wobei die Komponente b2) frei ist von Triglycerid.
7. Verfahren gemäß einer der Ausführungsformen 1 bis 6, wobei keine Polyetherpolyole (D) eingesetzt werden.
8. Verfahren gemäß einer der Ausführungsformen 1 bis 7, wobei die Komponente (E) ausgewählt ist aus der Gruppe bestehend aus Triethylphosphat (TEP), Diphenylkresylphosphat (DPK) und Triphenylphosphat (TPP).
9. Verfahren gemäß einer der Ausführungsformen 1 bis 7, wobei kein halogenfreies, phosphorhaltigens Flammschutzmittel (Komponente E) eingesetzt wird.
10. Verfahren gemäß einer der Ausführungsformen 1 bis 9, wobei kein Flammschutzmittel (F) eingesetzt wird.
11. Polyolkomponente enthaltend die vorgenannten Komponenten B) bis I),
   B) mindestens einem Polyetheresterpolyol (B), erhältlich durch Veresterung von
      b1) 10 bis 80 Gew.-% einer Dicarbonsäurezusammensetzung (b1), enthaltend
         b11) , einer oder mehrerer aromatischer Dicarbonsäuren oder Derivate derselben in einer Menge von 50 bis 100 Gew.-%, bezogen auf die Dicarbonsäurezusammensetzung (b1), wobei bei Verwendung von aromatischen Dicarbonsäurederivaten nur der Massenanteil der Dicarbonsäure als Komponente b11) zu berücksichtigen ist,
         b12) einer oder mehrerer aliphatischer Dicarbonsäuren (b12) oder Derivate derselben in einer Menge von 0 bis 50 Gew.-%, bezogen auf die Dicarbonsäurezusammensetzung b1),
      b2) einer oder mehrerer Fettsäuren und/oder Fettsäurederivate in einer Menge von 0 bis 30 Gew.-%,
      b3) eines oder mehrerer aliphatischer oder cycloaliphatischer Diole mit 2 bis 18 C-Atomen oder Alkoxylate in einer Menge von 2 bis 65 Gew.-% derselben, wobei bei Einsatz von Dicarbonsäurederivaten der Glykolanteil (Gew.-%) des Derivats als Komponenten b3) zu berücksichtigen ist,
      b4) 10 bis 70 Gew.-% einer Mischung enthaltend
         b41) ein Polyetherpolyol mit einer Funktionalität größer oder gleich 2, hergestellt durch Alkoxylierung eines Polyols mit einer Funktionalität größer 2 sowie optional
         b42) nicht-alkoxyliertem Polyol mit einer Funktionalität größer 2, dadurch gekennzeichnet, dass das Verhältnis von alkoxyliertem Polyetherpolyol b41) zu nicht-alkoxyliertem Polyol b42) größer 0,5 ist,
      jeweils bezogen auf die Gesamtmenge der Komponenten b1) bis b4), wobei sich die Komponenten b1) bis b4) zu 100 Gew.-% addieren,
   C) gegebenenfalls weiteren Polyesterpolyolen, die sich von denen der Komponente B) unterscheiden,
   D) gegebenenfalls einem Polyetherpolyol oder einer Mischung verschiedener Polyetherpolyole, und
   E) gegebenenfalls einem halogenfreien, phosphorhaltigen Flammschutzmittel oder einer Mischung aus verschiedenen halogenfreien, phosphorhaltigen Flammschutzmitteln,
   F) gegebenenfalls weiteren halogenfreien Flammschutzmitteln,
   G) einem oder mehreren Treibmitteln,
   H) Katalysatoren, und
   I) gegebenenfalls weiteren Hilfsmitteln oder Zusatzstoffen,
   wobei die halogenfreien Flammschutzmittel E) Phosphor enthalten und in solchen Anteilen verwendet werden, dass der Phosphorgehalt bezogen auf die Summe der Komponenten B) bis I) kleiner oder gleich 3 Gew.-% ist.
12. Polyolkomponente gemäß Ausführungsform 11, wobei die Komponente (b11) aus Polyethylenterephthalat (PET), Polybutylenterephthalat (PBT) oder einer Mischung davon mit Terephthalsäure besteht.
13. Polyolkomponente gemäß einer der Ausführungsformen 11 oder 12, wobei die Dicarbonsäurezusammensetzung (b1) aliphatische Dicarbonsäuren oder -derivate (Komponente b12) in einer Menge im Bereich von 0 bis 10 Gew.-% enthält, bezogen auf die Dicarbonsäurezusammensetzung (b1).
14. Polyolkomponente gemäß einer der Ausführungsformen 11 bis 13, wobei die Komponente b2) frei ist von Triglycerid.
15. Polyolkomponente gemäß einer der Ausführungsformen 11 bis 14, wobei keine Polyetherpolyole D) eingesetzt werden.
16. Polyolkomponente gemäß einer der Ausführungsformen 11 bis 15, wobei die Komponente (E) ausgewählt ist aus der Gruppe bestehend aus Triethylphosphat (TEP), Diphenylkresylphosphat (DPK) und Triphenylphosphat (TPP).
17. Polyolkomponente gemäß einer der Ausführungsformen 11 bis 15 wobei kein halogenfreies, phosphorhaltigens Flammschutzmittel (Komponente E) eingesetzt wird.
18. Polyolkomponente gemäß einer der Ausführungsformen 11 bis 17, wobei kein Flammschutzmittel (F) eingesetzt wird.
19. Polyurethan-Hartschaumstoffe oder Polyisocyanurat-Hartschaumstoffe, erhältlich oder erhalten nach einem Verfahren gemäß einer der Ausführungsformen 1 bis 10.
20. Verwendung eines Polyurethan-Hartschaumstoffs oder Polyisocyanurat-Hartschaumstoffs gemäß Ausführungsform 19 zur Herstellung von Sandwich-Elementen.
21. Polyolkomponente enthaltend:
   10 bis 95 Gew.-% der Polyetheresterpolyole B),
   0 bis 60 Gew.-% der weiteren Polyesterpoylole C),
   0 bis 35 Gew.-% der Polyetherpolyole D),
   0 bis 25 Gew.-% eines halogenfreien, phosphorhaltigen Flammschutzmittels oder einer Mischung aus verschiedenen halogenfreien, phosphorhaltigen Flammschutzmitteln E),
   0 bis 25 Gew.-% weiterer halogenfreier Flammschutzmitteln F),
   1 bis 45 Gew.-% eines oder mehrerer Treibmittel G),
   0,5 bis 10 Gew.-% Katalysatoren H), und
   0,5 bis 20 Gew.-% weitere Hilfs- und Zusatzstoffe I),
   jeweils bezogen auf das Gesamtgewicht der Komponenten B) bis I), wobei sich die Gew.-% zu 100 Gew.-% ergänzen
   wobei die halogenfreien Flammschutzmittel E) Phosphor enthalten und in solchen Anteilen verwendet werden, dass der Phosphorgehalt bezogen auf die Summe der Komponenten B) bis I) kleiner oder gleich 3 Gew.-% ist.
22. Polyolkomponente enthaltend:
   20 bis 95 Gew.-% der Polyetheresterpolyole B),
   0 bis 60 Gew.-% der weiteren Polyesterpoylole C),
   0 Gew.-% der Polyetherpolyole D),
   0 bis 25 Gew.-% eines halogenfreien, phosphorhaltigen Flammschutzmittels oder einer Mischung aus verschiedenen halogenfreien, phosphorhaltigen Flammschutzmitteln E),
   0 Gew.-% weiterer halogenfreier Flammschutzmittel F),
   1 bis 45 Gew.-% eines oder mehrerer Treibmittel G),
   0,5 bis 10 Gew.-% Katalysatoren H), und
   0,5 bis 20 Gew.-% weitere Hilfs- und Zusatzstoffe I),
   jeweils bezogen auf das Gesamtgewicht der Komponenten B) bis I), wobei sich die Gew.-% zu 100 Gew.-% ergänzen,
   wobei die halogenfreien Flammschutzmittel E) Phosphor enthalten und in solchen Anteilen verwendet werden, dass der Phosphorgehalt bezogen auf die Summe der Komponenten B) bis I) kleiner oder gleich 3 Gew.-% ist.
23. Polyolkomponente enthaltend:
   50 bis 95 Gew.-% der Polyetheresterpolyole B),
   0 Gew.-% der weiteren Polyesterpoylole C),
   0 Gew.-% der Polyetherpolyole D),
   0 bis 25 Gew.-% eines halogenfreien, phosphorhaltigen Flammschutzmittels oder einer Mischung aus verschiedenen halogenfreien, phosphorhaltigen Flammschutzmitteln E), 0 Gew.-% weiterer halogenfreier Flammschutzmittel F)
   1 bis 45 Gew.-% eines oder mehrerer Treibmittel G),
   0,5 bis 10 Gew.-% Katalysatoren H), und
   0,5 bis 20 Gew.-% weitere Hilfs- und Zusatzstoffe I),
   jeweils bezogen auf das Gesamtgewicht der Komponenten B) bis I), wobei sich die Gew.-% zu 100 Gew.-% ergänzen,
   wobei die halogenfreien Flammschutzmittel E) Phosphor enthalten und in solchen Anteilen verwendet werden, dass der Phosphorgehalt bezogen auf die Summe der Komponenten B) bis I) kleiner oder gleich 3 Gew.-% ist.
24. Polyolkomponente gemäß einer der Ausführungsformen 21 bis 23, wobei die Komponente (b11) aus Polyethylenterephthalat (PET), Polybutylenterephthalat (PBT) oder einer Mischung davon mit Terephthalsäure besteht.
25. Polyolkomponente gemäß einer der Ausführungsformen 21 bis 24, wobei die Dicarbonsäurezusammensetzung (b1) aliphatische Dicarbonsäuren oder -derivate (Komponente b12) in einer Menge im Bereich von 0 bis 10 Gew.-% enthält, bezogen auf die Dicarbonsäurezusammensetzung (b1).
26. Polyolkomponente gemäß einer der Ausführungsformen 21 bis 25, wobei die Komponente b2) frei ist von Triglycerid.
27. Polyolkomponente gemäß einer der Ausführungsformen 21 bis 26, wobei keine Polyetherpolyole D) eingesetzt werden.
28. Polyolkomponente gemäß einer der Ausführungsformen 21 bis 27, wobei die Komponente (E) ausgewählt ist aus der Gruppe bestehend aus Triethylphosphat (TEP), Diphenylkresylphosphat (DPK) und Triphenylphosphat (TPP).
29. Polyolkomponente gemäß einer der Ausführungsformen 21 bis 27 wobei kein halogenfreies, phosphorhaltigens Flammschutzmittel (Komponente E) eingesetzt wird.
30. Polyolkomponente gemäß einer der Ausführungsformen 21 bis 29, wobei kein Flammschutzmittel (F) eingesetzt wird.
31. Polyurethan-Hartschaumstoffe oder Polyisocyanurat-Hartschaumstoffe, erhältlich oder erhalten unter Verwendung einer Polyolkomponente gemäß einer der Ausführungsformen 21 bis 30.
32. Verwendung eines Polyurethan-Hartschaumstoffs oder Polyisocyanurat-Hartschaumstoffs gemäß Ausführungsform 31 zur Herstellung von Sandwich-Elementen.
33. Verfahren zur Herstellung von Polyurethan-Hartschaumstoffen oder Polyisocyanurat-Hartschaumstoffen umfassend die Umsetzung von
   A) mindestens einem Polyisocyanat (A),
      mit einer Polyolkomponente enthaltend:
         10 bis 95 Gew.-% der Polyetheresterpolyole B),
         0 bis 60 Gew.-% der weiteren Polyesterpoylole C),
         0 bis 35 Gew.-% der Polyetherpolyole D),
         0 bis 25 Gew.-% eines halogenfreien, phosphorhaltigen Flammschutzmittels oder einer Mischung aus verschiedenen halogenfreien, phosphorhaltigen Flammschutzmitteln E),
         0 bis 25 Gew.-% weiterer halogenfreier Flammschutzmitteln F),
         1 bis 45 Gew.-% eines oder mehrerer Treibmittel G),
         0,5 bis 10 Gew.-% Katalysatoren H), und
         0,5 bis 20 Gew.-% weitere Hilfs- und Zusatzstoffe I),
      jeweils bezogen auf das Gesamtgewicht der Komponenten B) bis I), wobei sich die Gew.-% zu 100 Gew.-% ergänzen,
      wobei das oder die halogenfreien Flammschutzmittel E) Phosphor enthält, keine Halogenatome enthält und in solchen Anteilen verwendet werden, dass der Phosphorgehalt bezogen auf die Summe der Komponenten A) bis I) kleiner oder gleich 1 Gew.-% ist.
34. Verfahren zur Herstellung von Polyurethan-Hartschaumstoffen oder Polyisocyanurat-Hartschaumstoffen umfassend die Umsetzung von
   A) mindestens einem Polyisocyanat (A),
      mit einer Polyolkomponente enthaltend:
         20 bis 95 Gew.-% der Polyetheresterpolyole B),
         0 bis 60 Gew.-% der weiteren Polyesterpoylole C),
         0 Gew.-% der Polyetherpolyole D),
         0 bis 25 Gew.-% eines halogenfreien, phosphorhaltigen Flammschutzmittels oder einer Mischung aus verschiedenen halogenfreien, phosphorhaltigen Flammschutzmitteln E),
         0 Gew.-% weiterer halogenfreier Flammschutzmittel F),
         1 bis 45 Gew.-% eines oder mehrerer Treibmittel G),
         0,5 bis 10 Gew.-% Katalysatoren H), und
         0,5 bis 20 Gew.-% weitere Hilfs- und Zusatzstoffe I),
      jeweils bezogen auf das Gesamtgewicht der Komponenten B) bis I), wobei sich die Gew.-% zu 100 Gew.-% ergänzen,
      wobei das oder die halogenfreien Flammschutzmittel E) Phosphor enthält, keine Halogenatome enthält und in solchen Anteilen verwendet werden, dass der Phosphorgehalt bezogen auf die Summe der Komponenten A) bis I) kleiner oder gleich 1 Gew.-% ist.
35. Verfahren zur Herstellung von Polyurethan-Hartschaumstoffen oder Polyisocyanurat-Hartschaumstoffen umfassend die Umsetzung von
   A) mindestens einem Polyisocyanat (A),
      mit einer Polyolkomponente enthaltend:
         50 bis 95 Gew.-% der Polyetheresterpolyole B),
         0 Gew.-% der weiteren Polyesterpoylole C),
         0 Gew.-% der Polyetherpolyole D),
         0 bis 25 Gew.-% eines halogenfreien, phosphorhaltigen Flammschutzmittelsoder einer Mischung aus verschiedenen halogenfreien, phosphorhaltigen Flammschutzmitteln E),
         0 Gew.-% weiterer halogenfreier Flammschutzmittel F),
         1 bis 45 Gew.-% eines oder mehrerer Treibmittel G),
         0,5 bis 10 Gew.-% Katalysatoren H), und
         0,5 bis 20 Gew.-% weitere Hilfs- und Zusatzstoffe I),
         jeweils bezogen auf das Gesamtgewicht der Komponenten B) bis I), wobei sich die Gew.-% zu 100 Gew.-% ergänzen,
      wobei das oder die halogenfreien Flammschutzmittel E) Phosphor enthält, keine Halogenatome enthält und in solchen Anteilen verwendet werden, dass der Phosphorgehalt bezogen auf die Summe der Komponenten A) bis I) kleiner oder gleich 1 Gew.-% ist.
36. Verfahren gemäß einer der Ausführungsformen 33 bis 35, wobei Komponente (A) ausgewählt ist aus der Gruppe bestehend aus
   i) Mehrfunktionelle Isocyanate auf Basis von Toluylendiisocyanat (TDI), insbesondere 2,4-TDI oder 2,6-TDI oder Mischungen aus 2,4- und 2,6-TDI;
   ii) Mehrfunktionelle Isocyanate auf Basis von Diphenylmethandiisocyanat (MDI), insbeson-dere 2,2'-MDI oder 2,4'-MDI oder 4,4'-MDI oder oligomeres MDI, das auch als Polyphe-nylpolymethylenisocyanat bezeichnet wird, oder Mischungen aus zwei oder drei der vor-genannten Diphenylmethandiisocyanate, oder Roh-MDI, welches bei der Herstellung von MDI anfällt, oder Mischungen aus mindestens einem Oligomer des MDI und mindestens einem der vorgenannten niedermolekularen MDI-Derivate; und
   iii) Gemische aus mindestens einem aromatischen Isocyanat gemäß Ausführungsform i) und mindestens einem aromatischen Isocyanat gemäß Ausführungsform ii).
37. Verfahren gemäß einer der Ausführungsformen 33 bis 36, wobei die Komponente (b11) aus Terephthalsäure oder Polyethylenterephthalat (PET) oder Gemischen daraus besteht.
38. Verfahren gemäß einer der Ausführungsformen 33 bis 37, wobei die Komponente (b11) aus Polyethylenterephthalat (PET), Polybutylenterephthalat (PBT) oder einer Mischung davon mit Terephthalsäure besteht.
39. Verfahren gemäß einer der Ausführungsformen 33 bis 38, wobei die Dicarbonsäurezusammensetzung (b1) aliphatische Dicarbonsäuren oder -derivate (Komponente b12) in einer Menge im Bereich von 0 bis 10 Gew.-% enthält, bezogen auf die Dicarbonsäurezusammensetzung (b1).
40. Verfahren gemäß einer der Ausführungsformen 33 bis 39, wobei die Komponente b2) frei ist von Triglycerid.
41. Verfahren gemäß einer der Ausführungsformen 33 bis 40, wobei keine Polyetherpolyole (D) eingesetzt werden.
42. Verfahren gemäß einer der Ausführungsformen 33 bis 41, wobei die Komponente (E) ausgewählt ist aus der Gruppe bestehend aus Triethylphosphat (TEP), Diphenylkresylphosphat (DPK) und Triphenylphosphat (TPP).
43. Verfahren gemäß einer der Ausführungsformen 33 bis 41, wobei kein halogenfreies, phosphorhaltigens Flammschutzmittel (Komponente E) eingesetzt wird.
44. Verfahren gemäß einer der Ausführungsformen 33 bis 43, wobei kein Flammschutzmittel (F) eingesetzt wird.
45. Polyurethan-Hartschaumstoffe oder Polyisocyanurat-Hartschaumstoffe, erhältlich oder erhalten nach einem Verfahren gemäß einer der Ausführungsformen 33 bis 1440.
46. Verwendung eines Polyurethan-Hartschaumstoffs oder Polyisocyanurat-Hartschaumstoffs gemäß Ausführungsform 45 zur Herstellung von Sandwich-Elementen.

Die Erfindung wird durch die nachstehenden Beispiele näher erläutert.

### Beispiele

1. Eingesetzte Materialien
Es wurden das nachstehenden Polyesterpolyol (Polyesterol 1) bzw. Polyetheresterpolyol (Polyesterol 2) eingesetzt.

| | |
|---|---|
| Polyesterol 1 (Vergleich): | Veresterungsprodukt von Phthalsäureanhydrid (37,2 Gew.-%), Ölsäure (15,1 Gew.-%), Diethylenglykol (44,9 Gew.-%) und Monoethylenglykol (2,8 Gew.-%) mit einer Hydroxylfunktionalität von 1,8, einer Hydroxylzahl von 220 mg KOH/g. |
| Polyesterol 2 (erfindungsgemäß): | Veresterungsprodukt von Terephthalsäure (25,2 Gew.-%), Ölsäure (14,2 Gew.-%), Diethylenglykol (20,0 Gew.-%) und einem Polyether (40,6 Gew.-%) auf Basis von Glyzerin und Ethylenoxid mit einer OH-Funktionalität von 3 und einer Hydroxylzahl von 535 mg KOH/g. Das Polyesterol weist eine Hydroxylfunktionalität von 2,5 und eine Hydroxylzahl von 245 mg KOH/g auf. |

2. Bestimmung der Brandwidrigkeit
Zur Bestimmung der Brandwidrigkeit wird die Flammhöhe nach EN ISO 11925-2 bestimmt. Je niedriger die Flammhöhe in diesem Test ist, desto besser die Brandwidrigkeit des Schaumstoffs. Eine Flammhöhe > 15 cm gilt als nicht bestanden.

### 3. Beispiel sowie Vergleichsbeispiel

### 3.1 Herstellung von Polyurethan-Hartschaumstoffen (Variante 1; Vergleichsbeispiel)

Die Isocyanate sowie die mit Isocyanat reaktiven Komponenten wurden zusammen mit den Treibmitteln, Katalysatoren und allen weiteren Zusatzstoffen bei einem Mischungsverhältnis von Polyolkomponente zu Isocyanat von 100 : 180 verschäumt.

### Polyolkomponente:

| | |
|---|---|
| 88 Gewichtsteile | Polyesterol 1 |
| 10 Gewichtsteile | Flammschutzmittel Triethylenphosphat (TEP) |
| 2 Gewichtsteile | Stabilisator Tegostab B8443 (siliconhaltiger Stabilisator) |

### Zusatzstoffe:

| | |
|---|---|
| 15 Gewichtsteile | Cyclopentan (95 %) |
| ca. 1,6 Gewichtsteile | Wasser |
| 1,5 Gewichtsteile | Kaliumacetat-Lösung (47 Gew.-% in Ethylenglykol) |
| weiterhin | Pentamethyldiethylentriamin zum Einstellen der Abbindezeiten, im Folgenden auch Katalysator 1 genannt. |

### Isocyanatkomponente:

180 Gewichtsteile Lupranat^{®} M 70 R (polymeres Methylendiphenyldiisocyanat (PMDI), mit einer Viskosität von ca. 650 mPa*s bei 25 °C von BASF SE)

Die Komponenten wurden mittels eines Laborrührwerks intensiv vermischt. Die Kernrohdichte wurde dabei bei konstantem Pentangehalt von 15,0 Teilen durch Variation des Wassergehalts auf 28 +/- 1 g/L eingestellt. Die Abbindezeit wurde ferner auf 54 +/- 2 s durch Variation des Anteils des Pentamethyldiethylentriamin (Katalysator 1) eingestellt.

Der so hergestellte Schaum besteht den Flammtest nach EN ISO 11925-2 nicht, da die Flammhöhe größer 15 cm ist.

### 3.2 Herstellung von Polyurethan-Hartschaumstoffen (Variante 2; erfindungsgemäßes Beispiel)

Die Isocyanate sowie die mit Isocyanat reaktiven Komponenten wurden zusammen mit den Treibmitteln, Katalysatoren und allen weiteren Zusatzstoffen bei einem Mischungsverhältnis von Polyolkomponente zu Isocyanat von 100 : 350 verschäumt.

### Polyolkomponente:

| | |
|---|---|
| 92 Gewichtsteile | Polyesterol 2 |
| 6 Gewichtsteile | Flammschutzmittel Triethylenphosphat (TEP) |
| 2 Gewichtsteile | Stabilisator Tegostab B8443 (siliconhaltiger Stabilisator) |

### Zusatzstoffe:

| | |
|---|---|
| 24 Gewichtsteile | Cyclopentan (95 %) |
| ca. 3 Gewichtsteile | Wasser |
| 2,5 Gewichtsteile | Kaliumacetat-Lösung (47 Gew.-% in Ethylenglykol) |
| weiterhin | Pentamethyldiethylentriamin zum Einstellen der Abbindezeiten, im Folgenden auch Katalysator 1 genannt. |

### Isocyanatkomponente:

350 Gewichtsteile Lupranat^{®} M 70 R (polymeres Methylendiphenyldiisocyanat (PMDI), mit einer Viskosität von ca. 650 mPa*s bei 25 °C von BASF SE)

Die Komponenten wurden mittels eines Laborrührwerks intensiv vermischt. Die Kernrohdichte wurde dabei bei konstantem Pentangehalt von 24,0 Teilen durch Variation des Wassergehalts auf 28 +/- 1 g/L eingestellt. Die Abbindezeit wurde ferner auf 54 +/- 2 s durch Variation des Anteils des Pentamethyldiethylentriamin (Katalysator 1) eingestellt.

Der so hergestellte Schaum besteht den Flammtest nach EN ISO 11925-2 mit einer mittleren Flammhöhe von 14,8 cm (Mittelwert aus 5 Versuchen, wobei alle Einzelwerte der Flammhöhen kleiner oder gleich 15 cm sind).

### 3.3 Herstellung von Polyurethan-Hartschaumstoffen (Variante 3; erfindungsgemäßes Beispiel)

Die Isocyanate sowie die mit Isocyanat reaktiven Komponenten wurden zusammen mit den Treibmitteln, Katalysatoren und allen weiteren Zusatzstoffen bei einem Mischungsverhältnis von Polyolkomponente zu Isocyanat von 100 : 400 verschäumt.

### Polyolkomponente:

| | |
|---|---|
| 92 Gewichtsteile | Polyesterol 2 |
| 6 Gewichtsteile | Flammschutzmittel Triethylenphosphat (TEP) |
| 2 Gewichtsteile | Stabilisator Tegostab B8443 (siliconhaltiger Stabilisator) |

### Zusatzstoffe:

| | |
|---|---|
| 26,5 Gewichtsteile | Cyclopentan (95 %) |
| ca. 3,2 Gewichtsteile | Wasser |
| 2,8 Gewichtsteile | Kaliumacetat-Lösung (47 Gew.-% in Ethylenglykol) |
| weiterhin | Pentamethyldiethylentriamin zum Einstellen der Abbindezeiten, im Folgenden auch Katalysator 1 genannt. |

### Isocyanatkomponente:

400 Gewichtsteile Lupranat^{®} M 70 R (polymeres Methylendiphenyldiisocyanat (PMDI), mit einer Viskosität von ca. 650 mPa*s bei 25 °C von BASF SE)

Die Komponenten wurden mittels eines Laborrührwerks intensiv vermischt. Die Kernrohdichte wurde dabei bei konstantem Pentangehalt von 26,5 Teilen durch Variation des Wassergehalts auf 28 +/- 1 g/L eingestellt. Die Abbindezeit wurde ferner auf 54 +/- 2 s durch Variation des Anteils des Pentamethyldiethylentriamin (Katalysator 1) eingestellt.

Der so hergestellte Schaum besteht den Flammtest nach EN ISO 11925-2 mit einer mittleren Flammhöhe von 14,2 cm (Mittelwert aus 5 Versuchen, wobei alle Einzelwerte der Flammhöhen kleiner oder gleich 15 cm sind).

Man erkennt dabei deutlich, dass die erfindungsgemäß hergestellten Schaumstoffe eine Flammwidrigkeit nach Euroclass E gemäß EN 13501-1 aufweisen und somit den Brandtest gemäß EN ISO 11925-2 bestehen, während der Vergleichsschaumstoff trotz vergleichbaren Pentangehalts bezogen auf den Schaumstoff und höherem Flammschutzmittegehalt bezogen auf den Schaumstoff, zu deutlich schlechteren Flammschutzeigenschaften führt und den Brandtest nicht besteht.

### Zitierte Literatur

DE 100 37 14 A1
US 5,051,528
WO 2010/043624
EP 1 058 701 A1

## Patentansprüche

1. Verfahren zur Herstellung von Polyurethan-Hartschaumstoffen oder Polyisocyanurat-Hartschaumstoffen umfassend die Umsetzung von
A) mindestens einem Polyisocyanat (A),
B) mindestens einem Polyetheresterpolyol (B), erhältlich durch Veresterung von
b1) einer Dicarbonsäurezusammensetzung (b1) in einer Menge von 10 bis 80 Gew.-%, enthaltend
b11) einer oder mehrerer aromatischer Dicarbonsäuren (b11) oder Derivate derselben, in einer Menge von 50 bis 100 Gew.-%, bezogen auf die Dicarbonsäurezusammensetzung (b1), wobei bei Verwendung von aromatischen Dicarbonsäurederivaten nur der Massenanteil der Dicarbonsäure als Komponente (b11) zu berücksichtigen ist,
b12) einer oder mehrerer aliphatischer Dicarbonsäuren (b12) oder Derivate derselben, in einer Menge von 0 bis 50 Gew.-%, bezogen auf die Dicarbonsäurezusammensetzung (b1),
b2) einer oder mehrerer Fettsäuren und/oder Fettsäurederivate (b2) in einer Menge von 0 bis 30 Gew.-%,
b3) eines oder mehrerer aliphatischer oder cycloaliphatischer Diole mit 2 bis 18 C-Atomen (b3) oder Alkoxylate derselben in einer Menge von 2 bis 65 Gew.-%, wobei bei Einsatz von Dicarbonsäurederivaten der Glykolanteil (Gew.-%) des Derivats als Komponenten b3) zu berücksichtigen ist,
b4) einer Mischung (b4) in einer Menge von 10 bis 70 Gew.-% enthaltend
b41) ein Polyetherpolyol (b41) mit einer Funktionalität größer oder gleich 2, hergestellt durch Alkoxylierung eines Polyols mit einer Funktionalität größer 2 sowie optional
b42) nicht-alkoxyliertem Polyol (b41) mit einer Funktionalität größer 2,
**dadurch gekennzeichnet, dass** das Verhältnis von alkoxyliertem Polyetherpolyol b41) zu nicht-alkoxyliertem Polyol b42) größer 0,5 ist,
jeweils bezogen auf die Gesamtmenge der Komponenten b1) bis b4), wobei sich die Komponenten b1) bis b4) zu 100 Gew.-% addieren,
C) gegebenenfalls weiteren Polyesterpolyolen (C), die sich von denen der Komponente B) unterscheiden,
D) gegebenenfalls einem Polyetherpolyol (D) oder einer Mischung verschiedener Polyetherpolyole (D), und
E) gegebenenfalls einem halogenfreien, phosphorhaltigen Flammschutzmittel oder einer Mischung aus verschiedenen halogenfreien, phosphorhaltigen Flammschutzmitteln (E),
F) gegebenenfalls weiteren halogenfreien Flammschutzmitteln (F),
G) einem oder mehreren Treibmitteln (G),
H) Katalysatoren (H), und
I) gegebenenfalls weiteren Hilfsmitteln oder Zusatzstoffen (I),
wobei das oder die halogenfreien Flammschutzmittel E) Phosphor enthält, keine Halogenatome enthält und in solchen Anteilen verwendet werden, dass der Phosphorgehalt bezogen auf die Summe der Komponenten A) bis I) kleiner oder gleich 1 Gew.-% ist.

2. Verfahren gemäß Anspruch 1, wobei Komponente (A) ausgewählt ist aus der Gruppe bestehend aus
i) Mehrfunktionelle Isocyanate auf Basis von Toluylendiisocyanat (TDI), insbesondere 2,4-TDI oder 2,6-TDI oder Mischungen aus 2,4- und 2,6-TDI;
ii) Mehrfunktionelle Isocyanate auf Basis von Diphenylmethandiisocyanat (MDI), insbeson-dere 2,2'-MDI oder 2,4'-MDI oder 4,4'-MDI oder oligomeres MDI, das auch als Polyphe-nylpolymethylenisocyanat bezeichnet wird, oder Mischungen aus zwei oder drei der vor-genannten Diphenylmethandiisocyanate, oder Roh-MDI, welches bei der Herstellung von MDI anfällt, oder Mischungen aus mindestens einem Oligomer des MDI und mindestens einem der vorgenannten niedermolekularen MDI-Derivate; und
iii) Gemische aus mindestens einem aromatischen Isocyanat gemäß Ausführungsform i) und mindestens einem aromatischen Isocyanat gemäß Ausführungsform ii).

3. Verfahren gemäß einem der Ansprüche 1 oder 2, wobei die Komponente (b11) aus Terephthalsäure oder Polyethylenterephthalat (PET) oder Gemischen daraus besteht.

4. Verfahren gemäß einem der Ansprüche 1 bis 3, wobei die Komponente (b11) aus Polyethylenterephthalat (PET), Polybutylenterephthalat (PBT) oder einer Mischung davon mit Terephthalsäure besteht.

5. Verfahren gemäß einem der Ansprüche 1 bis 4, wobei die
Dicarbonsäurezusammensetzung (b1) aliphatische Dicarbonsäuren oder -derivate (Komponente b12) in einer Menge im Bereich von 0 bis 10 Gew.-% enthält, bezogen auf die Dicarbonsäurezusammensetzung (b1).

6. Verfahren gemäß einem der Ansprüche 1 bis 5, wobei die Komponente b2) frei ist von Triglycerid.

7. Verfahren gemäß einem der Ansprüche 1 bis 6, wobei keine Polyetherpolyole (D) eingesetzt werden.

8. Verfahren gemäß einem der Ansprüche 1 bis 7, wobei die Komponente (E) ausgewählt ist aus der Gruppe bestehend aus Triethylphosphat (TEP), Diphenylkresylphosphat (DPK) und Triphenylphosphat (TPP).

9. Verfahren gemäß einem der Ansprüche 1 bis 7, wobei kein halogenfreies, phosphorhaltigens Flammschutzmittel (Komponente E) eingesetzt wird.

10. Verfahren gemäß einem der Ansprüche 1 bis 9, wobei kein Flammschutzmittel (F) eingesetzt wird.

11. Polyolkomponente enthaltend die vorgenannten Komponenten B) bis I),
B) mindestens einem Polyetheresterpolyol (B), erhältlich durch Veresterung von
b1) 10 bis 80 Gew.-% einer Dicarbonsäurezusammensetzung (b1), enthaltend
b11) , einer oder mehrerer aromatischer Dicarbonsäuren oder Derivate derselben in einer Menge von 50 bis 100 Gew.-%, bezogen auf die Dicarbonsäurezusammensetzung (b1), wobei bei Verwendung von aromatischen Dicarbonsäurederivaten nur der Massenanteil der Dicarbonsäure als Komponente b11) zu berücksichtigen ist,
b12) einer oder mehrerer aliphatischer Dicarbonsäuren (b12) oder Derivate derselben in einer Menge von 0 bis 50 Gew.-%, bezogen auf die Dicarbonsäurezusammensetzung b1),
b2) einer oder mehrerer Fettsäuren und/oder Fettsäurederivate in einer Menge von 0 bis 30 Gew.-%,
b3) eines oder mehrerer aliphatischer oder cycloaliphatischer Diole mit 2 bis 18 C-Atomen oder Alkoxylate in einer Menge von 2 bis 65 Gew.-% derselben, wobei bei Einsatz von Dicarbonsäurederivaten der Glykolanteil (Gew.-%) des Derivats als Komponenten b3) zu berücksichtigen ist,
b4) 10 bis 70 Gew.-% einer Mischung enthaltend
b41) ein Polyetherpolyol mit einer Funktionalität größer oder gleich 2, hergestellt durch Alkoxylierung eines Polyols mit einer Funktionalität größer 2 sowie optional
b42) nicht-alkoxyliertem Polyol mit einer Funktionalität größer 2, **dadurch gekennzeichnet, dass** das Verhältnis von alkoxyliertem Polyetherpolyol b41) zu nicht-alkoxyliertem Polyol b42) größer 0,5 ist,
jeweils bezogen auf die Gesamtmenge der Komponenten b1) bis b4), wobei sich die Komponenten b1) bis b4) zu 100 Gew.-% addieren,
C) gegebenenfalls weiteren Polyesterpolyolen, die sich von denen der Komponente B) unterscheiden,
D) gegebenenfalls einem Polyetherpolyol oder einer Mischung verschiedener Polyetherpolyole, und
E) gegebenenfalls einem halogenfreien, phosphorhaltigen Flammschutzmittel oder einer Mischung aus verschiedenen halogenfreien, phosphorhaltigen Flammschutzmitteln,
F) gegebenenfalls weiteren halogenfreien Flammschutzmitteln,
G) einem oder mehreren Treibmitteln,
H) Katalysatoren, und
I) gegebenenfalls weiteren Hilfsmitteln oder Zusatzstoffen,
wobei die halogenfreien Flammschutzmittel E) Phosphor enthalten und in solchen Anteilen verwendet werden, dass der Phosphorgehalt bezogen auf die Summe der Komponenten B) bis I) kleiner oder gleich 3 Gew.-% ist.

12. Polyolkomponente gemäß Anspruch 11, wobei die Komponente (b11) aus Polyethylenterephthalat (PET), Polybutylenterephthalat (PBT) oder einer Mischung davon mit Terephthalsäure besteht.

13. Polyolkomponente gemäß einem der Ansprüche 11 oder 12, wobei die Dicarbonsäurezusammensetzung (b1) aliphatische Dicarbonsäuren oder -derivate (Komponente b12) in einer Menge im Bereich von 0 bis 10 Gew.-% enthält, bezogen auf die Dicarbonsäurezusammensetzung (b1).

14. Polyolkomponente gemäß einem der Ansprüche 11 bis 13, wobei die Komponente b2) frei ist von Triglycerid.

15. Polyolkomponente gemäß einem der Ansprüche 11 bis 14, wobei keine Polyetherpolyole D) eingesetzt werden.

16. Polyolkomponente gemäß einem der Ansprüche 11 bis 15, wobei die Komponente (E) ausgewählt ist aus der Gruppe bestehend aus Triethylphosphat (TEP), Diphenylkresylphosphat (DPK) und Triphenylphosphat (TPP).

17. Polyolkomponente gemäß einem der Ansprüche 11 bis 15 wobei kein halogenfreies, phosphorhaltigens Flammschutzmittel (Komponente E) eingesetzt wird.

18. Polyolkomponente gemäß einem der Ansprüche 11 bis 17, wobei kein Flammschutzmittel (F) eingesetzt wird.

19. Polyurethan-Hartschaumstoffe oder Polyisocyanurat-Hartschaumstoffe, erhältlich oder erhalten nach einem Verfahren gemäß einem der Ansprüche 1 bis 10.

20. Verwendung eines Polyurethan-Hartschaumstoffs oder Polyisocyanurat-Hartschaumstoffs gemäß Anspruch 19 zur Herstellung von Sandwich-Elementen.
